# EUROPÄISCHE PATENTSCHRIFT

(11) **EP 3 257 691 B1**
(45) Veröffentlichungstag und Bekanntmachung des Hinweises auf die Patenterteilung: **18.03.2020**
(21) Anmeldenummer: 16190901.5
(22) Anmeldetag: 27.09.2016
(51) Int. Cl.: B60G 9/00, B60G 7/00, B60G 11/27, B60G 11/28

(54) **NUTZFAHRZEUGFAHRWERKS-TRAGWERK UND NUTZFAHRZEUGFAHRWERK**
COMMERCIAL VEHICLE CHASSIS SUPPORT STRUCTURE AND COMMERCIAL VEHICLE CHASSIS
STRUCTURE PORTANTE DE TRAIN ROULANT DE VEHICULE UTILITAIRE ET TRAIN ROULANT DE VEHICULE UTILITAIRE

(30) Priorität: 16.06.2016 DE 102016007367
(43) Veröffentlichungstag der Anmeldung: 20.12.2017
(73) Patentinhaber: Hochschule für Angewandte Wissenschaft und Kunst Hildesheim/Holzminden/Göttingen, 31134 Hildesheim (DE)
(72) Erfinder: Dr. FREY, Christopher, 34132 Kassel (DE)
(74) Vertreter: REHBERG HÜPPE + PARTNER

(56) Entgegenhaltungen:
- WO-A2-2005/037579
- DE-A1- 19 521 874
- DE-A1-102009 024 831
- DE-A1-102013 214 673
- DE-A1-102015 202 085
- GB-A- 2 355 698
- US-A- 5 409 254
- US-A1- 2003 205 879
- US-A1- 2006 181 047
- US-A1- 2007 069 496
- US-A1- 2007 145 705

## Beschreibung

### TECHNISCHES GEBIET DER ERFINDUNG

Die Erfindung betrifft ein Nutzfahrzeugfahrwerk und ein Nutzfahrzeugfahrwerks-Tragwerk. Das Nutzfahrzeugfahrwerk und das Nutzfahrzeugfahrwerks-Tragwerk finden vorzugsweise Einsatz in einem Nutzfahrzeug, wobei es sich bei dem Nutzfahrzeug bspw. um
- ein Nutzfahrzeug zum Personentransport wie einen Bus,
- ein Nutzfahrzeug zur Lastenbeförderung wie einen Transporter oder einen Lastkraftwagen (bspw. Autotransporter, Sattelschlepper, Zugmaschine, Tankwagen, Anhänger),
- ein Nutzfahrzeug für Einsatzkräfte,
- ein Agrarfahrzeug wie ein Mähdrescher oder ein Traktor oder
- ein sonstiges Nutzfahrzeug wie einen Muldenkipper, eine Kehrmaschine, ein Pistenfahrzeug u. ä.
handeln kann, um nur einige nicht beschränkende Beispiele zu nennen. Vorzugsweise findet die Erfindung Einsatz für ein starres Fahrwerk eines Nutzfahrzeugs. Solche Fahrwerke kommen beispielsweise als nicht angetriebene Fahrwerke in Lastkraftwagen als sogenannte Vorlaufbeziehungsweise Nachlaufachsen und in deren Anhängern zum Einsatz.

In einem Nutzfahrzeugfahrwerk dient ein Nutzfahrzeugfahrwerks-Tragwerk der hier vorliegenden Art insbesondere
- der drehbaren Lagerung der Fahrzeugräder,
- der gefederten und/oder gedämpften Abstützung der Fahrzeugräder gegenüber dem Fahrzeugchassis,
- der Kopplung der Einfederung der Fahrzeugräder auf der rechten und linken Seite des Fahrzeugs,
- der Abstützung einer Bremseinrichtung für die Fahrzeugräder und/oder
- der Aufnahme von dynamischen Radaufstandskräften, Seitenführungskräften, Beschleunigungskräften, Bremskräften von den Fahrzeugrädern und Abstützung und/oder (u. U. gefederten und/oder gedämpften) Weitergabe dieser Kräfte an das Fahrzeugchassis.

### STAND DER TECHNIK

In der Patentschrift DE 101 10 495 B4 ist ein marktübliches Nutzfahrzeugfahrwerk beschrieben. Der sich in Querrichtung des Fahrzeugs erstreckende Achskörper besteht aus einem hohlen Vierkantprofil. Das Vierkantprofil ist an seinen beiden Enden mit Achsschenkeln verbunden, die zur Lagerung der Räder dienen. Zwei sich in Längsrichtung des Fahrzeugs erstreckende Längslenker sind mit den lateralen Enden des Achskörpers verschraubt. Im vorderen Bereich sind die Längslenker über Drehgelenke an mit dem Fahrzeugchassis verbundenen Haltekonsolen gelagert. Am hinteren Ende der Längslenker sind erste Federfußpunkte von Fahrwerkfedern in Form von Luftfederbälgen befestigt. Die anderen Federfußpunkte der Luftfederbälge sind an dem Fahrzeugchassis abgestützt. Zwischen den Längslenkern und dem Fahrzeugchassis sind des Weiteren jeweils Stoßdämpfer angeordnet. Gemäß DE 101 10 495 B4 ist der dem Drehgelenk abgewandte Endbereich des Längslenkers, an dem sich der erste Federfußpunkt des Luftfederbalges abstützt, nach unten gekröpft, womit ermöglicht wird, dass der Abstützpunkt des Federfußpunktes des Luftfederbalges relativ zu dem Achsschenkel niedriger angeordnet werden kann, wodurch sich eine kompakte Bauweise ergeben soll.

Aus der Patentschrift EP 1 572 476 B1 ist ein Fahrwerk bekannt, bei dem die Fahrzeuglängslenker nicht aus Federstahl, sondern als hohlkastenförmige Blechkonstruktion ausgeführt sind. Die Längslenker umschließen den Achskörper, wobei aber die Position der Luftfeder im Wesentlichen erhalten bleibt und sich gegen einen zusätzlichen Luftbalgträger (554) abstützt. Bei dieser wie auch bei allen anderen Konstruktionen werden der Achskörper und die Führungslenker maßgeblich auf Biegung belastet. Insbesondere an den Verbindungsstellen zwischen Achskörper und Längslenker treten üblicherweise hohe Kerbspannungen auf. Um diese Spannungen auf ein zulässiges Maß zu reduzieren, wird die Wandstärke des Achskörpers so dimensioniert, dass er die Kerbspannungen in der Einspannstelle erträgt. Konzeptbedingt ist der Achskörper zwischen den Lenkern weit überdimensioniert und schwerer als in diesem Bereich erforderlich.

Aus der Patentschrift DE 197 81 757 B4 ist ein Fahrwerk bekannt, bei dem die Luftfedern einen geringeren horizontalen Versatz aufweisen als in den oben genannten Schriften. Die dort beschriebene Anordnung verbessert zwar einerseits die Federungseigenschaften, da ein höherer Anteil der Radlast gefedert in das Fahrzeugchassis übertragen wird. Andererseits baut dieses Fahrwerk relativ hoch, weshalb diese Anordnung im europäischen Markt praktisch kaum benutzt wird.

Die Druckschrift US 2007/0069496 A1 offenbart eine Tragstruktur, welche als abgewinkelter Tragstrang ausgebildet ist und bei welcher in einer Draufsicht U-förmig zwei die Seitenschenkel des U bildende Längslenker über eine den Grundschenkel des U bildende Querstrebe miteinander verbunden sind. Die Querstrebe setzt sich hierbei aus zwei miteinander verschweißten Halbschalen zusammen. In Endbereichen der Querstrebe, welche lateral über die Längslenker hinausragen, bildet die untere Halbschale eine Abstützfläche für ein Federelement des Fahrwerks aus, während die obere Halbschale eine Ausnehmung ausbildet, durch welche das Federelement nach oben aus der Querstrebe heraustreten kann.

Eine entsprechende Ausführungsform mit einer Gestaltung einer Tragstruktur mit einer verschweißten Halbschalenbauweise ist auch aus der Druckschrift US 2003/0205879 A1 bekannt, wobei allerdings hier auch die Längslenker in Halbschalenbauweise ausgebildet sind.

Aus der Druckschrift GB 2 355 698 A ist eine Ausgestaltung einer Längslenker tragenden Querstrebe als hohle, so genannte Monocoque-Struktur bekannt.

Auch die Druckschrift US 5,409,254 A offenbart die Ausgestaltung eines Längslenker verbindenden Querträgers mit Aufnahmen für Federelemente als mehrteilige Schweißkonstruktion.

WO 2005/037579 A2 offenbart einen flexiblen Achskörper, welcher fest mit einem Fahrzeugrahmen verschraubt werden kann. Hierbei verfügt der Achskörper über einen Längsschnitt entsprechend einem liegenden, sich in einer vertikalen Ebene erstreckenden U. Der obere Seitenschenkel des U ist fest mit dem Fahrzeugrahmen verschraubt. Der abgerundete Grundschenkel des U bildet einen flexiblen Federbereich. Der andere Seitenschenkel des U ist leicht nach unten geneigt und weist eine untere Deckplatte sowie eine obere Deckplatte auf, zwischen welchen sich versteifende Platten erstrecken. In dem dem Grundschenkel abgewandten Endbereich des unteren Seitenschenkels sind die Achsen gelagert. Zwischen den Fahrzeugrahmen und die obere Deckplatte des unteren Seitenschenkels des U ist ein Luftfederbalg zwischengeordnet. Eine Einfederung der Achsen erfolgt einerseits unter Beaufschlagung der Luftfederbälge und andererseits unter elastischer Verformung des flexiblen Grundschenkels des U. WO 2005/037579 A2 offenbart sowohl einen durchgehenden, für beide Fahrzeugseiten bestimmten Achskörper als auch einen lediglich für eine Fahrzeugseite bestimmten Achskörper, der damit eine Art Längslenker ausbildet. Für eine weitere aus WO 2005/037579 A2 bekannte Ausführungsform besitzt der Achskörper nicht einen in erster Näherung U-förmigen Längsschnitt, sondern vielmehr einen Längsschnitt entsprechend eines langgezogenen Z. Hierbei wird der obere Horizontalschenkel des Z mit dem Fahrzeugrahmen verschraubt, während im Bereich des unteren Horizontalschenkels des Z die Achsen gelagert sind. Die Luftfederbalg ist in diesem Fall auf der Oberseite des unteren Horizontalschenkels des Z abgestützt. Der flexible Teilbereich ist in diesem Fall im Übergangsbereich von dem oberen Horizontalschenkel des Z zu dem geneigten Verbindungsbereich des Z gebildet.

Eine grundsätzlich entsprechende Ausgestaltung ist auch aus US 2007/0145705 A1 bekannt.

US 2006/0181047 A1 offenbart die Ausbildung eines Längslenkers aus miteinander verschweißten Blechen, welche einen teilgeöffneten Kastenquerschnitt ausbilden. Die derart gestalteten Längslenker werden über Sattelklammern an einem konventionellen Achskörper mit zylindrischer Geometrie befestigt.

DE 10 2009 024 831 A1 offenbart eine Verbundlenker-Hinterachse, bei welcher ein Längslenker kastenförmig ausgebildet ist mit in Richtung eines Querträgers zunehmendem Querschnitt. Die Befestigung der Längslenker an dem Querträger erfolgt über Knotenelemente, die einen hinteren Endbereich des Längslenkers mit dem Querträger koppeln. An den Knotenelementen sind zusätzlich zwei Radträger vorgesehen. Auch die Knotenelemente sind als kastenförmige Hohlkörper ausgebildet.

DE 10 2013 214 673 A1 offenbart einen Längslenker, Schräglenker oder Querlenker, welcher aus einem faserverstärkten thermoplastischen Werkstoff durch Spritzgießen oder Spritzpressen hergestellt ist. Einsatz finden Verstärkungsfasern in Form von Carbonfasern, Glasfasern oder Aramidfasern. Die derart hergestellten Lenker verfügen im Längsschnitt über einen umgebenden, umlaufenden Steg, welcher fachwerkartig durch Versteifungsrippen versteift ist.

DE 195 21 874 A1 offenbart eine Achsaufhängung für eine Starrachse eines Fahrzeugs. Hierbei findet ein Vierpunktlenker Einsatz, der ein Flächentragwerk aufweist. Das Flächentragwerk ist elastisch, so dass dieses eine Verwindung desselben mit einer hieraus resultierenden Relativbewegung der Gelenkarme ermöglicht. Der Vierpunktlenker ermöglicht Pendelbewegungen der Fahrzeugachse gegenüber dem Fahrzeugrahmen quer zur Fahrtrichtung. Eine hierbei auftretende Verwindung des Flächentragwerks verursacht Rückstellkräfte für eine Wiederherstellung einer Gleichgewichtslage der Gelenkarme.

DE 10 2015 202 085 A1 betrifft ein Fahrwerksbauteil, bei dem es sich beispielweise um einen Dreiecksquerlenker, einen Querlenker oder eine Verbundlenkerhinterachse handeln kann. Das Fahrwerksbauteil ist als Hybridkonstruktion ausgebildet mit einer Tragwerkskomponente aus einem ersten Werkstoff wie Metall und einer Verstärkungskomponente aus einem faserverstärkten Kunststoff. Die Tragwerkskomponente einerseits und die Verstärkungskomponente andererseits verfügen über sich in erster Näherung entsprechende Geometrien und sind sandwichartig zueinander angeordnet und durch Umspritzen, Kleben, Schrauben, Nieten, Klipsen, Bördeln, Durchspritzen u. ä. miteinander verbunden.

Weitere Ausführungsformen von Nutzfahrzeugfahrwerken mit einem Achskörper und Längslenkern sind insbesondere aus den Druckschriften EP 2 567 838 A2, DE 10 2014 011 803 A1 und EP 0 940 319 B1 bekannt.

### AUFGABE DER ERFINDUNG

Der Erfindung liegt die Aufgabe zugrunde, ein Nutzfahrzeugfahrwerk und ein Nutzfahrzeugfahrwerks-Tragwerk vorzuschlagen, welches insbesondere hinsichtlich
- des Gewichts,
- der Federungseigenschaften,
- der mechanischen Festigkeit, Dauerbeständigkeit und/oder Steifigkeit und/oder
- Bauraumverhältnisse
verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Der Erfindung liegt insbesondere die Erkenntnis zugrunde, dass herkömmliche Nutzfahrzeugfahrwerke mit einem Achskörper und Längslenkern gebildet sind, die eine Bau- oder Montageeinheit bilden. Hierbei können der Achskörper und Längslenker separat voneinander ausgebildet sein und miteinander verschraubt sein. Möglich ist aber auch, dass der Achskörper und die Längslenker einstückig ausgebildet sind. Die bekannten Achskörper einerseits und die Längslenker andererseits sind jeweils als Träger mit einem Vollprofil oder einem Hohlprofil ausgebildet. Die Träger des Achskörpers und der Längslenker sind hierbei in grober Näherung U-förmig in mechanischer Reihenschaltung miteinander verbunden, wobei der Achskörper den Grundschenkel des U bildet und die Längslenker jeweils einen Seitenschenkel des U bilden. Die Längslenker dienen beim Stand der Technik nicht ausschließlich zum Führen der Achse. Vielmehr übertragen diese die Achslast einerseits in das Drehgelenk zwischen dem Längslenker und der Fahrzeugkonsole des Fahrzeugchassis und andererseits zu der Fahrwerkfeder, wodurch die Längslenker mit beträchtlichen Biegemomenten beaufschlagt werden. Die Übertragung der Biegemomente führt dazu, dass die die Längslenker bildenden Träger relativ massiv ausgeführt werden müssen und entsprechend schwer sind (z.B. Vierkant Federstahl 80x40mm). Im Bereich der Verbindung zwischen den Längslenkern und dem Achskörper sowie des Achskörpers mit den Achsschenkeln sind die Achskörper mit hohen Kerbspannungen beansprucht. Um die erforderliche Festigkeit zu gewährleisten, sind die die Längslenker und den Achskörper bildenden Träger hinreichend massiv auszubilden, was zu einer Erhöhung der Masse des Achskörpers und der Führungslenker führt. Da es sich bei der Masse des Achskörper und der Führungslenker um ungefederte Massen des Fahrzeugs handelt, werden grundsätzlich möglichst kleine Massen angestrebt. Die Erhöhung des Gewichts des Nutzfahrzeugfahrwerks führt darüber hinaus im gleichen Maße zu einer Reduzierung der Nutzlast des Fahrzeugs, da das zulässige Gesamtgewicht des Fahrzeugs (gesetzlich und infolge von technischen Anforderungen wie der Dauertragfähigkeit der Reifen) begrenzt ist.

Vor diesem Hintergrund schlägt die Erfindung vor, den Achskörper und die Längslenker nicht jeweils mit strangartigen Trägern, die U-förmig miteinander verbunden sind, zu bilden. Vielmehr schlägt die Erfindung den Einsatz eines Nutzfahrzeugfahrwerks-Tragwerks vor. In dem Nutzfahrzeugfahrwerks-Tragwerk werden der Achskörper und/oder die Längslenker skelettartig mit mehreren Streben gebildet. In einem derartigen "Tragwerk" sind nicht einzelne Träger mechanisch in Reihenschaltung hintereinandergeschaltet, sondern die Streben des Tragwerks sind beispielsweise fachwerkartig, verzweigt oder ringartig ausgebildet, sodass mehrere Streben eine flächige oder sogar räumliche Struktur aufspannen. Erfindungsgemäß wird somit erstmals für einen Achskörper und die Längslenker eines Nutzfahrzeugfahrwerks der Einsatz eines Tragwerks vorgeschlagen, um im Rahmen der Erfindung die Nutzung einer Erzeugung eines hohen Flächenträgheitsmomentes einer flächigen oder räumlichen Struktur mit skelettartigen, fachwerkartigen, verzweigten oder ringartigen Streben für ein Fahrwerk eines Nutzfahrzeuges zu ermöglichen. Auf diese Weise kann mit einer deutlich gegenüber dem Stand der Technik reduzierten Masse die erforderliche Steifigkeit gewährleistet werden.

Für die konstruktive Ausgestaltung der Streben gibt es im Rahmen der Erfindung vielfältige Möglichkeiten. Um hier lediglich einige nicht beschränkende Beispiele zu nennen, können die Streben mit einem Vollprofil oder einem im Querschnitt randoffenen oder randgeschlossenen Hohlprofil gebildet sein, über einen beliebigen über die Längserstreckung der Strebe konstanten oder veränderlichen Querschnitt verfügen und/oder eine geradlinig oder beliebig in einer Ebene oder im Raum gekrümmte Längsachse aufweisen.

Erfindungsgemäß weist das Nutzfahrzeugfahrwerks-Tragwerk eine untere Querstrebe sowie eine obere Querstrebe auf. Die obere Querstrebe ist oberhalb der unteren Querstrebe angeordnet und mit dieser über mindestens eine Diagonalstrebe und/oder ein Verbindungsstück verbunden.

Beispielsweise können die genannten Querstreben endseitig jeweils mit einem Verbindungsstück miteinander verbunden sein und zusätzlich zwischen den Verbindungsstücken über mindestens eine Diagonalstrebe verbunden sein, womit ein (Teil-)Tragwerk gebildet ist. Dieses (Teil-) Tragwerk erstreckt sich beispielsweise in einer vertikalen Ebene, welche quer zur Fahrzeuglängsachse orientiert ist, und stellt beispielsweise eine hinreichende Biegesteifigkeit hinsichtlich eines Biegemoments, welches um die Fahrzeuglängsachse orientiert ist, bereit.

Erfindungsgemäß sind die beiden Endbereiche der oberen Querstrebe nach unten in Richtung der unteren Querstrebe abgewinkelt. Diese Ausgestaltung trägt einerseits der Tatsache Rechnung, dass das Biegemoment von den Endbereichen der Querstreben zur Mitte derselben größer wird. Infolge der Abwinklung nimmt das Flächenträgheitsmoment entsprechend in Richtung der Mitte zu, sodass dem Verlauf des Biegemoments durch die Abwinklung Rechnung getragen werden kann. Andererseits ergibt sich infolge der Abwinklung der Endbereiche im lateralen Seitenbereich des Fahrzeugs unter Umständen eine reduzierte Bauhöhe des Nutzfahrzeugfahrwerks-Tragwerks im lateralen Seitenbereich, sodass dieses besonders gut und platzsparend in das Fahrzeug, insbesondere in das Fahrzeugchassis, integriert werden kann. Um lediglich einige nicht beschränkende Beispiele zu nennen, kann die obere Querstrebe in der Art eines umgekehrten V oder eines umgekehrten U mit divergierenden Seitenschenkeln des U ausgebildet sein.

Erfindungsgemäß weist die obere Querstrebe zwei Ausnehmungen auf. Während grundsätzlich möglich ist, dass die Querschnitte dieser Ausnehmungen randoffen sind, sind diese vorzugsweise mit einem randgeschlossenen Querschnitt gebildet. Die Ausnehmungen sind hierbei insbesondere in Bereichen nahe der Radaufhängungspunkte angeordnet. Durch die Ausnehmungen ist ein Raum ausgebildet, der oberhalb der unteren Querstrebe angeordnet ist. Der Raum ist zur Aufnahme einer Fahrwerkfeder geeignet, sodass die Ausnehmung einen Querschnitt derart besitzt, dass sich durch diese die Fahrwerkfeder erstrecken kann. Die Fahrwerkfeder kann dabei mit dem unteren Federfußpunkt an der unteren Querstrebe abgestützt sein, wozu die untere Querstrebe auch mit einer geeigneten Befestigungs- und/oder Führungseinrichtung für den unteren Federfußpunkt der Fahrwerkfeder ausgestattet sein kann, während ein sich nach oben aus dem Raum und aus der Ausnehmung der oberen Querstrebe erstreckender oberer Federfußpunkt an dem Fahrzeugchassis abgestützt, befestigt und/oder geführt sein kann. Während gemäß dem Stand der Technik die Fahrwerkfeder einerseits und der Achskörper mit den Längslenkern räumlich getrennt waren, woraus ein großer Bauraumbedarf resultiert hat, können für diese Ausgestaltung der Erfindung die Fahrwerkfeder und das Nutzfahrzeugfahrwerks-Tragwerk "ineinander geschachtelt werden", woraus sich u. U. Bauraumvorteile ergeben. Des Weiteren wird durch diese Ausgestaltung der verfügbare Bauraum für versteifende Maßnahmen des Nutzfahrzeugfahrwerks-Tragwerks erweitert, da sich Teilbereiche desselben auch um die Fahrwerkfeder herum erstrecken können. Möglich ist auch, dass durch die Ausnehmung der oberen Querstrebe ein Schutz oder eine Führung der Fahrwerkfeder gewährleistet werden kann. Möglich ist des Weiteren auch, dass sich die Fahrwerkfeder nicht nach oben aus der oberen Querstrebe heraus erstreckt. In diesem Fall kann sich eine Konsole des Fahrzeugchassis durch die Ausnehmung der oberen Querstrebe nach unten zu der Fahrwerkfeder erstrecken.

Grundsätzlich kann das Nutzfahrzeugfahrwerks-Tragwerk eine beliebige Geometrie aufweisen. So kann dies bei schrittweise eben oder gekrümmt ausgebildet sein. Für einen weiteren Vorschlag der Erfindung ist das Nutzfahrzeugfahrwerks-Tragwerk in einer Seitenansicht L-förmig ausgebildet. Einen Vertikalschenkel des L bildet dabei ein vertikales, den Achskörper ausbildendes Teiltragwerk. Hingegen bildet einen Vertikalschenkel des L ein horizontales, die Längslenker ausbildendes Teiltragwerk. Während grundsätzlich möglich ist, dass die beiden genannten Teiltragwerke miteinander verschraubt oder anderweitig aneinander befestigt sind, sind diese vorzugsweise stoffschlüssig miteinander verbunden oder integral ausgebildet. Möglich ist hierbei auch, dass die starre Kopplung der beiden Teiltragwerke über eine gemeinsame Querstrebe erfolgt. Diese Ausgestaltung der Erfindung nutzt aus, dass ein L-förmig abgewinkeltes Tragwerk unter Umständen eine weiter erhöhte Steifigkeit infolge eines erhöhten Flächenträgheitsmoments aufweisen kann. Möglich ist auch, dass die einzelnen Teiltragwerke gezielt auf die unterschiedlichen Beanspruchungen des Nutzfahrzeugfahrwerks-Tragwerks angepasst sind.

Für einen Vorschlag der Erfindung weisen die Streben einen Doppel-T-Querschnitt auf, sodass die Streben für sich genommen bereits ein großes Flächenträgheitsmoment mit hieraus resultierender großer Biegesteifigkeit aufweisen. Hierbei sind die Streben aus Blechen geschweißt, wobei dann ein Blech den Vertikalschenkel des Doppel-T bilden kann, während zwei weitere Bleche die Horizontalschenkel des Doppel-T bilden können. Ein Zuschneiden der Bleche, insbesondere mittels Laserschneiden, kann bspw. hinsichtlich einer veränderlichen Breite des Bleches in Abhängigkeit von der wirkenden Beanspruchung des Querschnitts erfolgen, sodass sich je nach Beanspruchung des Querschnitts ein veränderlicher Querschnitt der Strebe ergeben kann. Andererseits kann mittels geeignetem Zuschnitt und geeigneter Formgebung oder Wölbung der Bleche auch Einfluss auf den Verlauf der Längsachse der Strebe genommen werden.

Möglich ist, dass das Nutzfahrzeugfahrwerks-Tragwerk zwei Längslenker aufweist, die (hinsichtlich der Außenkontur in einer Draufsicht) dreieckförmig ausgebildet sind. Hierbei können die Längslenker von drei dreieckförmig angeordneten Streben, insbesondere einer inneren Strebe und eine äußeren Strebe und einem Teil der unteren Querstrebe, gebildet sein. Auf diese Weise kann bei geringem Gewicht eine Bereitstellung eines Längslenkers mit der erforderlichen Steifigkeit infolge eines großen Flächenträgheitsmomentes erfolgen. Für diesen Vorschlag der Erfindung bilden auch die Längslenker ein (Teil-) Tragwerk, welches sich ungefähr in einer horizontalen Ebene des Fahrzeugs erstreckt. Die Erfindung überträgt für diese Ausgestaltung die an sich bekannte Gestaltung eines Dreieckslenkers für einen PKW auf ein Nutzfahrzeugfahrwerks-Tragwerk für ein starres Fahrwerk eines Nutzfahrzeugs.

In weiterer Ausgestaltung der Erfindung besitzt die obere Querstrebe im Bereich der Ausnehmung zumindest teilweise, insbesondere im Bereich der gesamten Ausnehmung, einen Abstand von der unteren Querstrebe, der kleiner ist als die Längserstreckung der Fahrwerkfeder. Für den Fall der geneigten Ausbildung der Endbereiche der oberen Querstrebe kann sich dieser Abstand auch in lateraler Richtung verringern. Infolge dieser Wahl des Abstandes erstreckt sich die Fahrwerkfeder zumindest teilweise im oberen Endbereich aus der oberen Querstrebe heraus, sodass hier eine Anbindung derselben an das Fahrzeugchassis möglich ist.

Ein weiterer Vorschlag der Erfindung widmet sich der folgenden Problematik:
Die Gesamthöhe von Nutzfahrzeugen ist gesetzlich beschränkt. Damit für den Laderaum möglichst viel Höhe zur Verfügung steht, soll das Nutzfahrzeugfahrwerk möglichst flach bauen - maßgeblich ist dabei die sogenannte *Fahrhöhe h.* Die Fahrhöhe ist definiert als der vertikale Abstand von der Achsmittellinie bis zur Oberkante des Nutzfahrzeugfahrwerks beziehungsweise der Unterkante des Fahrzeugchassis. Damit die Fahrhöhe möglichst gering ist, werden die verhältnismäßig langen Luftfederbälge in der Regel nicht direkt über dem Achskörper montiert, sondern horizontal versetzt hinter dem Achskörper positioniert, wozu die Längslenker eine Kröpfung aufweisen können (vgl. EP 1 572 476 B1 und DE 101 10 495 B4). Mit dieser Anordnung sind konzeptionelle Nachteile verbunden, die dadurch verursacht werden, dass die vertikale Radlast auf zwei, ein Kräftepaar bildende Komponenten aufgeteilt wird, wobei eine Komponente über das Drehgelenk des Längslenkers ungefedert und die andere Komponente über die Fahrwerkfeder gefedert in das Fahrzeugchassis eingeleitet wird. Bei herkömmlicher Anordnung wird ein Drittel der Radlast ungefedert über das Drehgelenk des Längslenkers übertragen. Dies führt zu ungenügenden Federungseigenschaft des Fahrzeuges, was zum einen die mechanische Belastung des Nutzfahrzeugfahrwerkes erhöhen und zum anderen das Transportgut unnötig durch Stöße strapazieren kann. Ein weiterer Nachteil betrifft das Gewicht des Nutzfahrzeugfahrwerks, das durch diese Anordnung negativ beeinflusst wird.

Erfindungsgemäß wird, insbesondere vor dem obigen Hintergrund, vorgeschlagen, dass das Nutzfahrzeugfahrwerks-Tragwerk Radaufhängungspunkte aufweist, deren Verbindungslinie eine Achsmittellinie bildet. In einer Draufsicht oder Projektion auf eine Horizontalebene durchkreuzt die Verbindungslinie den oberhalb der unteren Querstrebe angeordneten, zumindest nach oben geöffneten Raum, insbesondere die Ausnehmung der oberen Querstrebe. Dies hat zur Folge, dass die Einleitung der Radlasten über die Radaufhängungspunkte in das Nutzfahrzeugfahrwerks-Tragwerk ungefähr bei derselben Längserstreckung der Längslenker erfolgt wie die Abstützung der Längslenker über die Fahrwerkfeder an dem Fahrzeugchassis. Für den idealen Fall, dass die Verbindungslinie mittig den nach oben geöffneten Raum durchkreuzt, erfolgt dieses bei derselben Längserstreckung, was zur Folge hat, dass die Abstützung der Radlast nicht über ein Kräftepaar mit einer Komponente in dem Drehgelenk des Längslenkers an dem Fahrzeugchassis und einer Komponente in der Fahrwerkfeder erfolgt, sondern vielmehr eine alleinige Abstützung über die Fahrwerkfeder erfolgt. Auch in dem nicht idealen Fall der außermittigen durch Kreuzung des nach oben geöffneten Raumes ist die unerwünschte, über das Drehgelenk abgestützte Komponente deutlich gegenüber der entsprechenden Komponente bei Ausgestaltungen gemäß dem Stand der Technik reduziert. Die erfindungsgemäße Ausgestaltung reduziert somit die ungefedert in das Fahrzeugchassis eingeleiteten Kräfte. Andererseits wird die Biegebeanspruchung des Längslenkers reduziert, womit dieser unter Umständen anders dimensioniert werden kann mit einer hieraus resultierenden Reduktion der Masse.

Für den Fall, dass die Ausnehmung gegenüber der Verbindungslinie der Radaufhängungspunkte mit einem Versatz angeordnet ist, beträgt dieser vorzugsweise weniger als 30 %(insbesondere weniger als 25 %, weniger als 20 %, weniger als 15 %, weniger als 10 % , weniger als 5% oder sogar weniger als 3%) der Längserstreckung der Längslenker zwischen der Verbindungslinie und dem Drehachse des Drehgelenks.

Für die Geometrie des Querschnitts der Ausnehmung gibt es vielfältige Möglichkeiten. Vorzugsweise weist die Ausnehmung, betrachtet in einer Draufsicht, eine Form auf, die keine Ecke hat. Bspw. kann die Ausnehmung elliptisch, kreisförmig oder wenigstens annähernd kreisförmig ausgebildet sein.

Möglich ist durchaus, dass das Nutzfahrzeugfahrwerks-Tragwerk lediglich eine Diagonalstrebe aufweist. In bevorzugter Ausgestaltung der Erfindung weist dieses allerdings zwei Diagonalstreben auf, welche vorzugsweise ungefähr mittig die beiden Querstreben miteinander verbinden.

Möglich ist hierbei, dass sich die beiden Diagonalstreben in der Art eines nach oben offenen V von der unteren Querstrebe zu der oberen Querstrebe erstrecken. Für den Fall, dass die Endbereiche der oberen Querstrebe nach unten abgewinkelt sind, können die Schenkel des V im Bereich des Anfangs oder Übergangs der Abwinklungen der Endbereiche der oberen Querstrebe einmünden.

Für die Verbindung der oberen und unteren Querstrebe in den lateralen Endbereichen gibt es vielfältige Möglichkeiten. So können diese beispielsweise unmittelbar miteinander verbunden, insbesondere verschweißt, sein. Für einen Vorschlag der Erfindung sind die obere Querstrebe und die untere Querstrebe an beiden Enden über jeweils ein Verbindungsstück miteinander verbunden. Hierbei verfügt das Verbindungsstück über eine geeignete Geometrie, um die Übertragung von Kräften von dem Verbindungsstück zu den beiden Querstreben ohne Spannungsspitzen zu gewährleisten. Andererseits kann das Verbindungsstück weitere Funktionen erfüllen, welche insbesondere mit der Ankopplung des Nutzfahrzeugfahrwerks-Tragwerks an die Radeinheiten verbunden sind. Das Verbindungsstück kann auf beliebige Weise gefertigt sein, insbesondere als Frästeil, Gussteil oder Schmiedeteil. Vorzugsweise handelt es sich bei dem Verbindungsstück um ein Umformteil.

Die Erfindung schlägt des Weiteren vor, dass das Verbindungsstück einen Bremsflansch und/oder einen Achszapfen integriert. Hierbei ist durchaus möglich, dass der Bremsflansch und/oder der Achszapfen einstückig von dem Verbindungsstück ausgebildet werden. Möglich ist aber auch, dass der Bremsflansch und/oder der Achszapfen als separate Teile ausgebildet sind, die dann mit bekannten Verbindungstechniken an dem Verbindungsstück befestigt werden können. In bevorzugter Ausgestaltung ist der Bremsflansch an einen Grundkörper des Verbindungsstücks angeschweißt, während der Achszapfen mit einer geeigneten Bohrung des Bremsflansches und/oder des Grundkörpers verpresst ist, wobei ergänzend eine Verschweißung des Achszapfens mit dem Bremsflansch und/oder dem Grundkörper erfolgen kann.

Herkömmliche Baueinheiten, welche mit dem Achskörper und den Längslenkern gebildet sind, verfügen über eine Masse, die größer ist als 145 kg. Erfindungsgemäß wird unter Nutzung der Ausbildung des Achskörpers mit den Längslenkern als Nutzfahrzeugfahrwerks-Tragwerk vorgeschlagen, dass ein Nutzfahrzeugfahrwerks-Tragwerk, welches für eine technische Achslast von zumindest 7000 kg bestimmt ist, eine Masse von weniger als 130 kg aufweist. Vorzugsweise beträgt die Masse weniger als 125 kg, weniger als 120 kg, weniger als 115 kg, weniger als 110 kg, weniger als 105 kg oder weniger als sogar 100 kg, was auch gelten kann, wenn die technische Achslast zumindest 8000 kg beträgt.
Eine weitere Lösung der der Erfindung zugrunde liegenden Aufgabe wird durch ein Nutzfahrzeugfahrwerk bereitgestellt, welches ein Nutzfahrzeugfahrwerks-Tragwerk aufweist, wie dieses zuvor erläutert worden ist. Diese Lösung nutzt aus, dass sich in einem Nutzfahrzeugfahrwerks-Tragwerk offene Flächen oder Räume ergeben, in welchem zusätzliche Bauteile angeordnet werden können, die somit kompakt in das Nutzfahrzeugfahrwerk integriert werden können und die unter Umständen durch die Bauteile zumindest teilweise umgebende Streben des Nutzfahrzeugfahrwerks-Tragwerks geschützt sein können.
Wie zuvor erläutert können in Ausnehmungen, hier Ausnehmungen der oberen Querstrebe, die Fahrwerkfedern, insbesondere Luftfederbälge, angeordnet werden.
Alternativ oder zusätzlich möglich ist, dass in freien Flächen oder Räumen des Nutzfahrzeugfahrwerks-Tragwerks Elektronik, mindestens ein Elektromotor, bei welchem es sich um einen Aktuator oder einen Antriebsmotor für ein Fahrzeugrad handeln kann, eine Steuereinheit und/oder eine Ventileinrichtung zu Beeinflussung der pneumatischen Beaufschlagung einer als Luftfederbalg ausgebildeten Fahrwerkfeder und/oder ein Bremsaktuator angeordnet sind/ist.
Wenn im Rahmen der vorliegenden Beschreibung eine "Verbindung" von Bauteilen oder Bauelementen beschrieben ist, kann es sich um eine beliebige Befestigung handeln. Vorzugsweise erfolgt die Verbindung der Bauelemente stoffschlüssig, insbesondere durch Verschweißen, wobei hiervon auch eine integrale Ausbildung der verbundenen Bauteile oder Bauelemente umfasst ist.
Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Strebe die Rede ist, ist dies so zu verstehen, dass genau eine Strebe, zwei Streben oder mehr Streben vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.

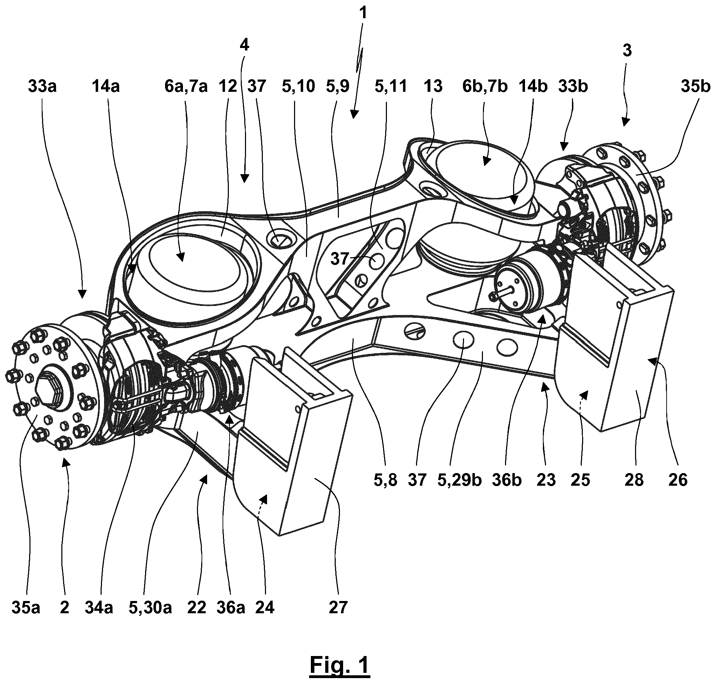

- **Fig. 1**: zeigt ein Nutzfahrzeugfahrwerk in einer räumlichen Ansicht schräg von links vorne und oben.

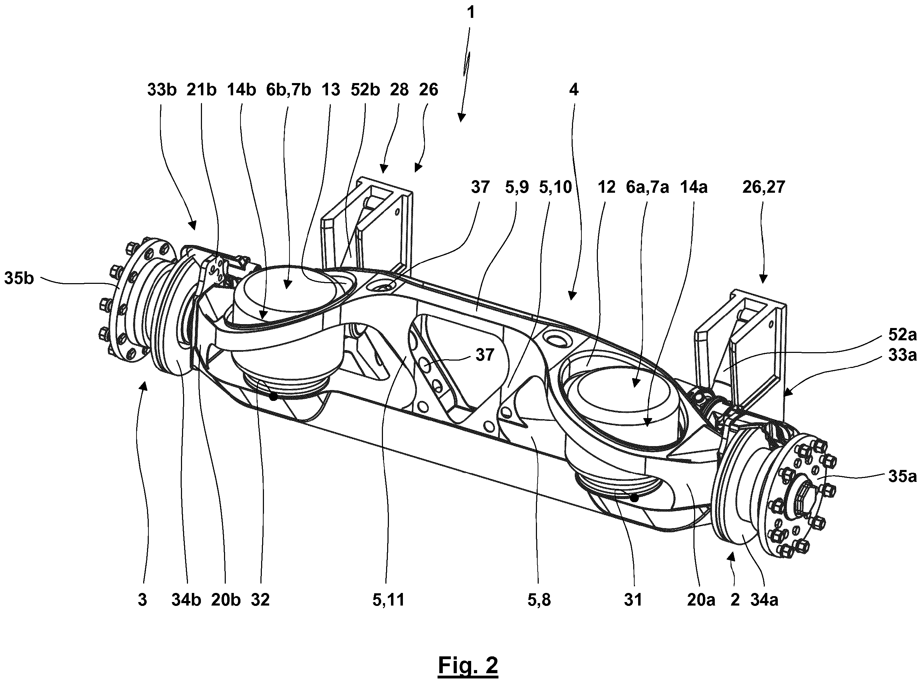

- **Fig. 2**: zeigt das Nutzfahrzeugfahrwerk gemäß Fig. 1 in einer räumlichen Ansicht schräg von rechts hinten und oben.

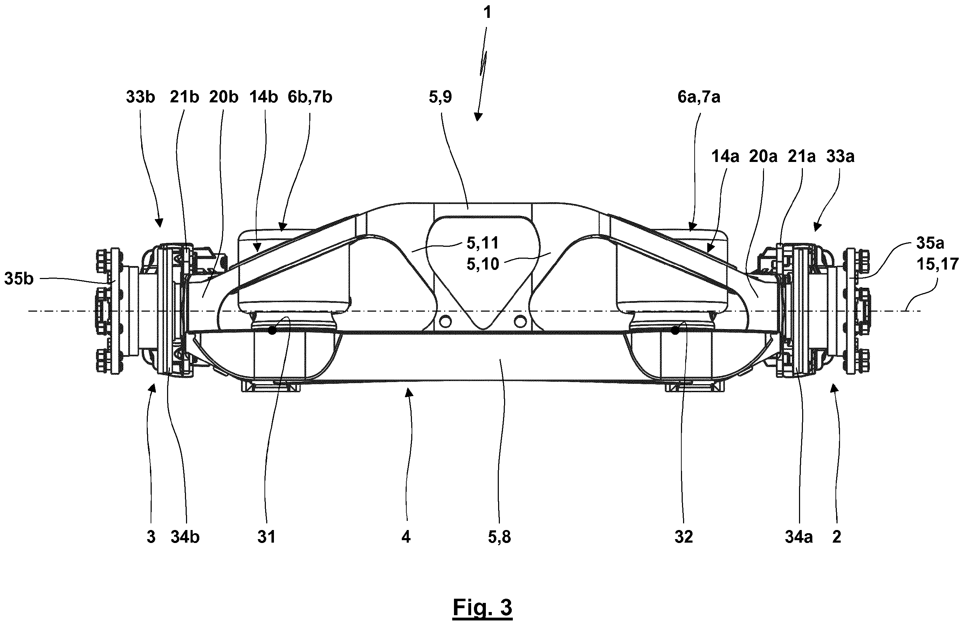

- **Fig. 3**: zeigt das Nutzfahrzeugfahrwerk gemäß Fig. 1 und 2 in einer rückseitigen Ansicht.
- **Fig. 4**: zeigt das Nutzfahrzeugfahrwerk gemäß Fig. 1 bis 3 in einer Draufsicht.

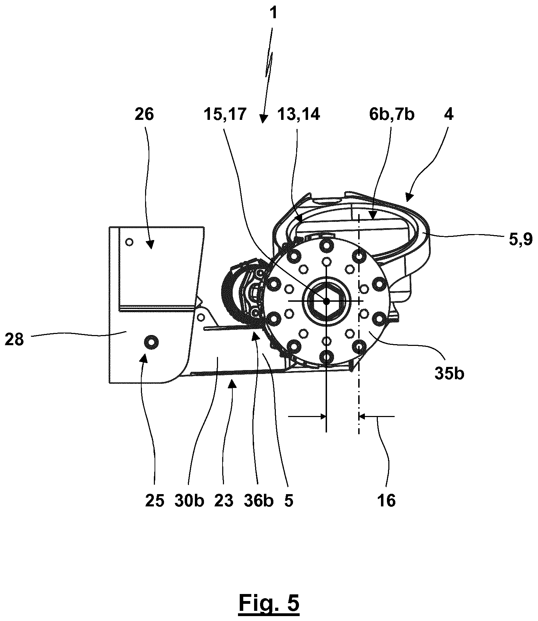

- **Fig. 5**: zeigt das Nutzfahrzeugfahrwerk gemäß Fig. 1 bis 4 in einer Seitenansicht.
- **Fig. 6 bis 10**: zeigen ein Nutzfahrzeugfahrwerks-Tragwerk eines Nutzfahrzeugfahrwerks gemäß Fig. 1 bis 5 in Ansichten entsprechend Fig. 1 bis 5.
- **Fig. 11**: zeigt das Nutzfahrzeugfahrwerks-Tragwerk gemäß Fig. 6 bis 10 in einer Ansicht von unten.
- **Fig. 12**: zeigt das Nutzfahrzeugfahrwerks-Tragwerk gemäß Fig. 6 bis 10 in einer Ansicht von vorne.

### FIGURENBESCHREIBUNG

In der folgenden Figurenbeschreibung wird für gleiche Bauelemente teilweise dasselbe Bezugszeichen verwendet, wobei dann die unterschiedlichen Bauelemente mit a, b gekennzeichnet sein können. Wird in einem derartigen Fall lediglich ein Bezugszeichen genannt, kann dies für sämtliche, mit dem zusätzlichen Buchstaben a, b gekennzeichneten Bauelemente mit diesem Bezugszeichen gelten.

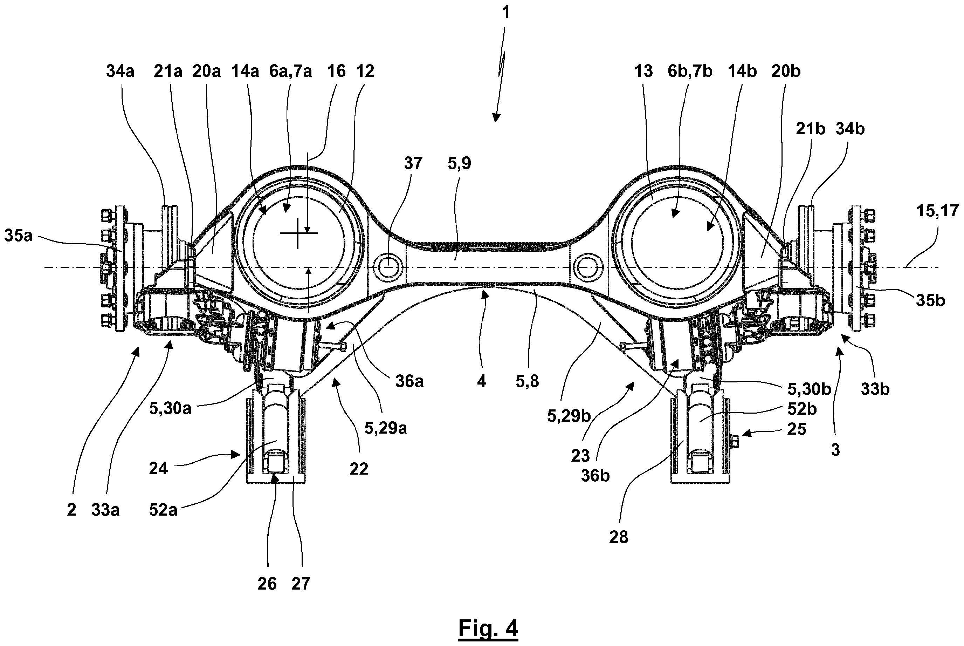

Bei einem erfindungsgemäßen Nutzfahrzeugfahrwerk 1 sind die Verbindungen zwischen linkem und rechtem Rad (hier nicht dargestellt) sowie den Radaufhängungspunkten 2, 3 durch ein Nutzfahrzeugfahrwerks-Tragwerk 4 mit mehreren miteinander verbundenen Streben 5a, 5b, 5c,... ausgeführt, das skelettartig die Fahrwerkfedern 6, hier Luftfederbälge 7, umschlingt. Das Nutzfahrzeugfahrwerks-Tragwerk 4 weist dabei mindestens eine untere Querstrebe, mindestens eine obere Querstrebe und mindestens eine Diagonalstrebe auf. In bevorzugten Ausführungsformen weist das Nutzfahrzeugfahrwerks-Tragwerk 4 genau eine untere Querstrebe 8 und/oder genau eine obere Querstrebe 9 und/oder mindestens zwei Diagonalstreben 10, 11 auf. Die obere Querstrebe 9 des Nutzfahrzeugfahrwerks-Tragwerks 4 weist in den Bereichen nahe der Radaufhängungspunkte 2, 3 jeweils eine Ausnehmung 12, 13 auf. Durch diese Ausnehmung 12, 13 wird erreicht, dass oberhalb der unteren Querstrebe 8 in den Bereichen nahe der Aufhängungspunkte 2, 3 ein zumindest nach oben geöffneter Raum 14 ausgebildet ist, der zur Aufnahme der Fahrwerkfeder 6 geeignet ist. Die obere Querstrebe 9 kann in einer besonders bevorzugten Ausführungsform derart ausgebildet sein, dass sie die der Draufsicht (Fig. 4) dargestellte Form annimmt. Hierbei weist die Ausnehmung 12, 13 in der Draufsicht eine im Querschnitt randgeschlossene Form auf, die beispielsweise elliptisch oder kreisförmig oder wenigstens annähernd kreisförmig sein kann. Die obere Querstrebe 9 umschließt die Ausnehmung 12, 13 vollständig. Die Form der Ausnehmung 12, 13 in der Draufsicht weist besonders bevorzugt keine Ecke auf. In einer alternativen Ausführung kann die Ausnehmung 12, 13 auch im Querschnitt randgeschlossen ausgebildet sein, wobei diese insbesondere einseitig geöffnet sein kann. Die Ausnehmung 12, 13 kann gegenüber einer Verbindungslinie 15 der Radaufhängungspunkte 2, 3 mit einem Versatz 16 angeordnet sein, wie es auch insbesondere der Figur 4 entnommen werden kann. Die Verbindungslinie 15 der Radaufhängungspunkte 2, 3 durchkreuzt den oberhalb der unteren Querstrebe 8 von der Ausnehmung 12, 13 ausgebildeten nach oben offenen Raum 14 des Nutzfahrzeugfahrwerks-Tragwerks 4. Im erfindungsgemäßen Nutzfahrzeugfahrwerk 1 werden die Fahrwerkfedern 6 in der im Nutzfahrzeugfahrwerks-Tragwerk 4 gebildeten Ausnehmung 12, 13 platziert. Die Fahrwerkfedern 6 sind in der Seitenansicht in nahezu vertikaler Verlängerung des Radaufstandspunktes positioniert und werden von Mittellinien 17 von Achszapfen 18, 19 durchkreuzt. Die untere Querstrebe 8 verläuft unterhalb der Fahrwerkfedern 6 und die obere Querstrebe 9 umschlingt die Fahrwerkfedern 6. Beide Querstreben 8, 9 sind im mittleren Abschnitt über Diagonalstreben 10, 11 verbunden. An ihren Enden sind die Querstreben 10, 11 über ein Verbindungsstück 20 miteinander verbunden, das vorzugsweise einen Bremsflansch 21 und einen Achszapfen 18, 19 integriert. Im vorderen Abschnitt des Nutzfahrzeugfahrwerkes 1 erstrecken sich die Längslenker 22, 23 von der unteren Querstrebe 8 bis zu Drehgelenken 24, 25, in denen das Nutzfahrzeugfahrwerk 1 schwenkbar gegenüber dem Fahrzeugchassis 26, hier Konsolen 27, 28 des Fahrzeugchassis 26, gelagert ist. Die Längslenker 22, 23 sind dreieckförmig und verfügen über eine innere Strebe 29 und eine äußere Strebe 30. Im hinteren Abschnitt der unteren Querstrebe 8 bildet diese vorzugsweise zwei Federkonsolen 31, 32 aus, die einer Befestigung und/oder flächigen Abstützung der Fahrwerkfedern 6 dienen.

An dem Bremsflansch 21 ist eine Bremseinrichtung 33 mit einem Bremssattel gehalten. Auf den Achszapfen 18,19 sind eine Bremsscheibe 34 der Bremseinrichtung 33 sowie ein Radflansch 35, an welchem ein Fahrzeugrad befestigt werden kann, gehalten. Die Bremseinrichtung 33 kann über einen Bremsaktuator 36, welcher als hydraulischer, pneumatischer oder elektrischer Bremsaktuator ausgebildet sein kann, betätigt werden. Wie dargestellt kann der Bremsaktuator 36 an einer Befestigungseinrichtung des Nutzfahrzeugfahrwerk-Tragwerks 4 abgestützt sein. Für das dargestellte Ausführungsbeispiel ist die Befestigungseinrichtung von der unteren Querstrebe 8 ausgebildet. Vorzugsweise stützt sich der Bremsaktuator 36 auf der Oberseite der unteren Querstrebe 8 ab, wobei dies in einer Draufsicht in Längsrichtung zwischen der Fahrwerkfeder 6 und dem Drehgelenk 24, 25 erfolgt.

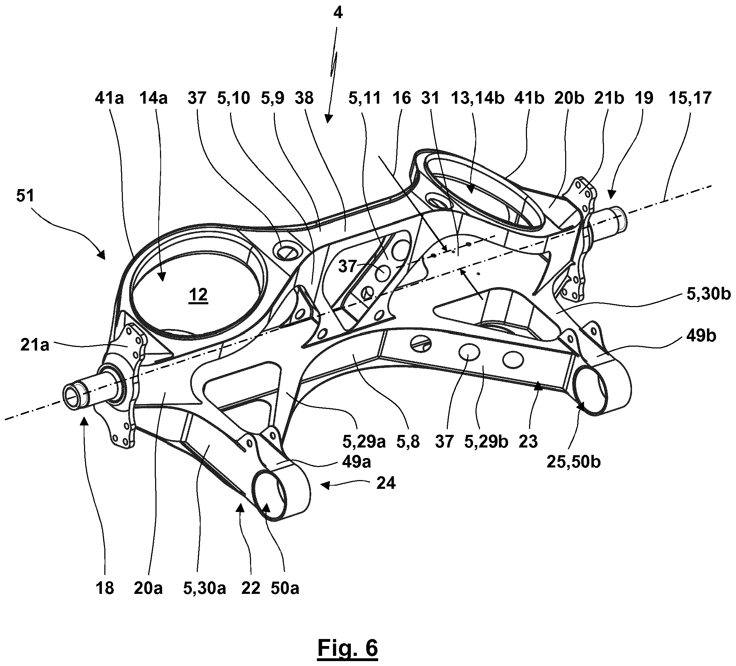

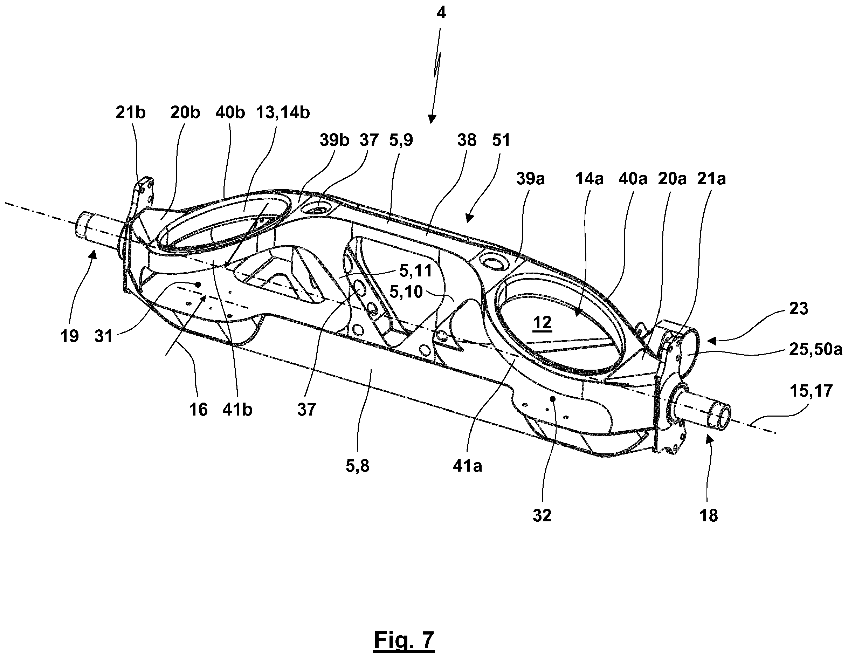

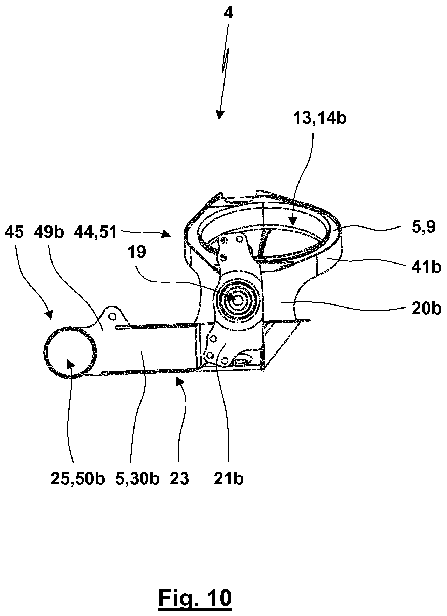

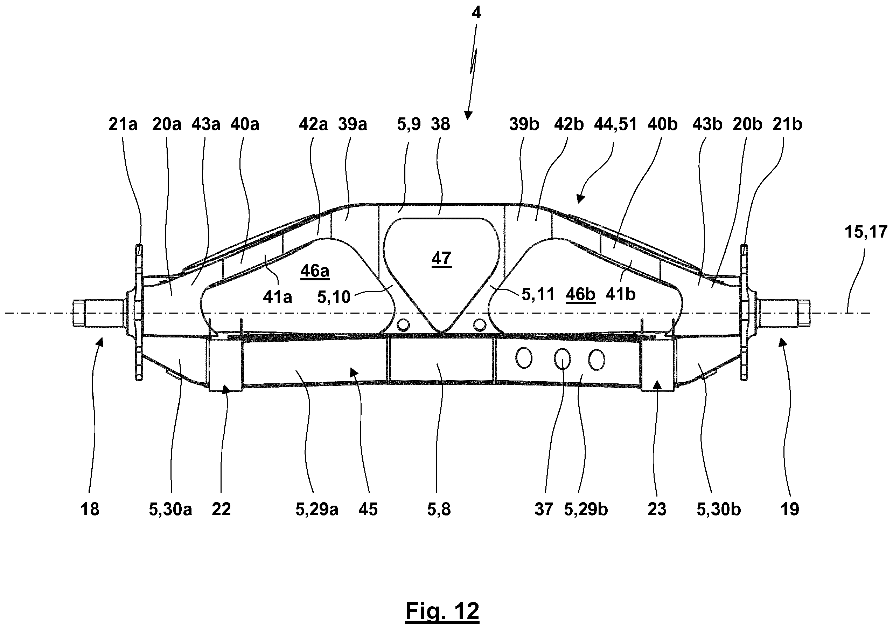

In den Fig. 6 bis 12 ist das Nutzfahrzeugfahrwerks-Tragwerk 4 in unterschiedlichen Ansichten als Einzelteil mit den Achszapfen 18,19 und den Verbindungsstücken 20 dargestellt.

Die Streben 5 des Nutzfahrzeugfahrwerks-Tragwerks 4 sind als Doppel-T-Träger ausgebildet. Hierbei ist der Vertikalschenkel des Doppel-T für die obere Querstrebe 9 und die Diagonalstreben 10,11 horizontal orientiert, während für die obere Querstrebe 9 und die Diagonalstrebe 10,11 die Horizontalschenkel des Doppel-T in Vertikalebenen angeordnet sind. Hingegen sind für die Streben 29,30 die Vertikalschenkel des Doppel-T in Vertikalebenen angeordnet, während die Horizontalschenkel des Doppel-T hier in horizontalen Ebenen angeordnet sind. Die untere Querstrebe 8 ist unter Umständen ebenfalls mit einem Doppel-T-Träger gebildet. Vorzugsweise ist diese aber als Hohl- oder Kastenprofil ausgebildet. Die Doppel-T-Träger und das Hohl- oder Kastenprofil sind jeweils aus vorzugsweise mittels eines Lasers zugeschnittenen Blechen für die Wandungen bzw. für die Vertikal- und Horizontalschenkel hergestellt, welche vor dem verschweißen auch entsprechend geformt werden, damit diese die aus den Figuren ersichtliche Wölbung aufweisen.

Wie in den Figuren zu erkennen ist, ist die Ober- und/oder Unterseite einerseits der unteren Querstrebe 8 und andererseits der inneren Strebe 29 und der äußeren Strebe 30 vollständig, zumindest teilweise oder zumindest im Übergangsbereich von der unteren Querstrebe 8 zu den Streben 29, 30 aus einem einzigen, durchgehenden Blech hergestellt, welches hier eben ausgebildet ist. Entsprechend sind die vordere und/oder hintere Stirnseite einerseits der oberen Querstrebe 9 und andererseits der Diagonalstreben 10, 11 aus einem vollständig, zumindest teilweise oder zumindest im Übergangsbereich von der oberen Querstrebe 9 zu den Diagonalstreben 10, 11 aus einem einzigen, durchgehenden Blech hergestellt, welches hier im Bereich der Ausnehmungen 12,13 gewölbt ist. In den Übergangsbereichen zwischen den Diagonalstreben 10,11 und der oberen Querstrebe 9 besitzen die Horizontalschenkel des Doppel-T kurvenförmige Erweiterungen, sodass diese in diesem Übergangsbereichen eine größere Erstreckung aufweisen und eine Übertragungen von Spannungen ohne Spannungsspitzen ermöglichen. Das Entsprechende gilt für die Horizontalschenkel des Doppel-T in den Übergangsbereichen zwischen der unteren Querstrebe 8 und den Streben 29, 30.

Um eine Gewichtsreduzierung zu erzielen, können die Vertikalschenkel des Doppel-T mit Ausnehmungen versehen sein. Da sich diese im Umgebungsbereich der neutralen Faser des Doppel-T-Trägers erstrecken, führen diese nicht zu einer signifikanten Reduzierung des Flächenträgheitsmoments.

Vorzugsweise ist das Nutzfahrzeugfahrwerks-Tragwerk 4 mit zumindest zehn miteinander verschweißten Blechen zwecks Bildung der Streben 5 gebildet. Hierbei erfolgt teilweise oder vollständig ein Verschweißen der Bleche mittels Kehlnähten. Möglich ist, dass ausschließlich oder teilweise Bleche Einsatz finden mit einer Blechstärke, die kleiner ist als 5 mm, insbesondere kleiner ist als 4 mm oder 3,5 mm oder sogar 3 mm.

Die obere Querstrebe 9 verfügt über ein horizontal orientiertes Mittelstück 38 mit geradliniger Längsachse. Über Abwinklungen 39a, 39b geht die obere Querstrebe 9 von dem Mittelstück 38 nach außen über in abgewinkelte Endbereiche 40a, 40b, welche hier ebenfalls eine geradlinige Längsachse aufweisen. Die Länge der Endbereiche 40a, 40b entspricht der Länge des Mittelstücks 38, wobei aber auch Abweichungen von plus/minus 30 % (insbesondere plus/minus 20 % oder plus/minus 10 %) möglich sind. Die Neigung der Längsachsen der Endbereiche 40a, 40b gegenüber dem Mittelstück 38 liegt im Bereich von 10° bis 50°(insbesondere 15° bis 40° oder 20° bis 30°). Mit zunehmendem Abstand der Endbereiche 40a, 40b von dem Mittelstück 38 verringert sich der Abstand derselben von der unteren Querstrebe 8.

Die Ausnehmungen 12, 13 sind in den Endbereiche 40a, 40b ungefähr mittig in Richtung der Längsachse derselben angeordnet. Die Endbereiche 40a, 40b bilden Ringe 41a, 41b, welche die Ausnehmungen 12, 13 begrenzen, und koaxial zueinander angeordnete Fortsätze 42, 43. Der Fortsatz 42 ist hierbei mit dem Mittelstück 38 verbunden, während der Fortsatz 43 mit dem Verbindungsstück 20 verbunden ist. Die Ringe 41a, 41b verfügen über einen grundsätzlich konstanten Querschnitt. Allerdings gehen Ringe 41a, 41b über abgerundete und vergrößerte Querschnitte einerseits in das Mittelstück 38 und andererseits in das Verbindungsstück 20 über, um Spannungsspitzen zu vermeiden.

Die Diagonalstreben 10, 11 sind V-förmig angeordnet. Im Verbindungsbereich der beiden Schenkel des V ist mittig auf der Oberseite der unteren Querstrebe 8 angeordnet, wobei hier die Diagonalstreben 10, 11 unmittelbar benachbart zueinander angeordnet sind. In dem Verbindungsbereich besitzen die Horizontalschenkel des Doppel-T eine vergrößerte Erstreckung, sodass eine großflächige Anbindung der Diagonalstreben 10, 11 an die untere Querstrebe 8 gewährleistet ist. Von diesem Verbindungsbereich erstrecken sich die Schenkel des V in Richtung der Abwinklungen 39a, 39b. Die dem Verbindungsbereich abgewandten Endbereiche der Schenkel münden in die Abwinklungen 39a, 39b ein. Die Diagonalstreben 10, 11 verfügen hier über eine geradlinige Längsachse. Der Öffnungswinkel des V liegt im Bereich von 50° bis 90° (insbesondere 60° bis 85° oder 65° bis 80°).

Die Verbindung der oberen Querstrebe 8, hier der Fortsätze 43, mit den Endbereichen der unteren Querstrebe 9 erfolgt über die Verbindungsstücke 20a, 20b. Die Verbindungsstücke 20 sind vorzugsweise als Umformteile ausgebildet und mit den Fortsätzen 43 und den Endbereichen der unteren Querstrebe 9 verschweißt. Die Verbindungsstücke 20 verfügen über eine Ausnehmung oder Bohrung, in welcher mittels einer Passung die Achszapfen 18,19 aufgenommen sind. Des Weiteren verfügen die Verbindungsstücke 20 über einen Befestigungsbereich für den zugeordneten Bremsflansch 21, der mit dem Verbindungsstück 20 verschraubt und/oder verschweißt sein kann. Möglich ist, dass die Achszapfen 18, 19 alternativ oder zusätzlich zu der Passung mit dem Bremsflansch 21 und/oder dem zugeordneten Verbindungsstück 20 verschweißt sind.

In den Längslenkern 22, 23 sind die Streben 30 in einer horizontalen Ebene unter einem Winkel im Bereich von 70° bis 110° (insbesondere im Bereich von 80° bis 100° oder 85° bis 95°) gegenüber der Verbindungslinie 15 orientiert. Hingegen bilden die Streben 29a, 29 b ein V mit einem Öffnungswinkel im Bereich von 70° bis 110° (insbesondere im Bereich von 80° bis 100° oder 85° bis 95°). Die Streben 29a, 29b sind ungefähr im Bereich der Längserstreckung der unteren Querstrebe 8, welche vertikal unterhalb der Abwinklungen 39a, 39b liegt, an der unteren Querstrebe 8 befestigt und sind in ihren Endbereichen mit den Streben 30 verbunden. Die Streben 30 erstrecken sich mit Fortsätzen 49a, 49b über den Verbindungsbereich hinaus und bilden im Bereich der Fortsätze 49a, 49b Lageraugen 50a, 50b der Drehgelenke 24, 25 aus.

Das Nutzfahrzeugfahrwerks-Tragwerk 4 ist mit zwei Teiltragwerken 44, 45 gebildet.

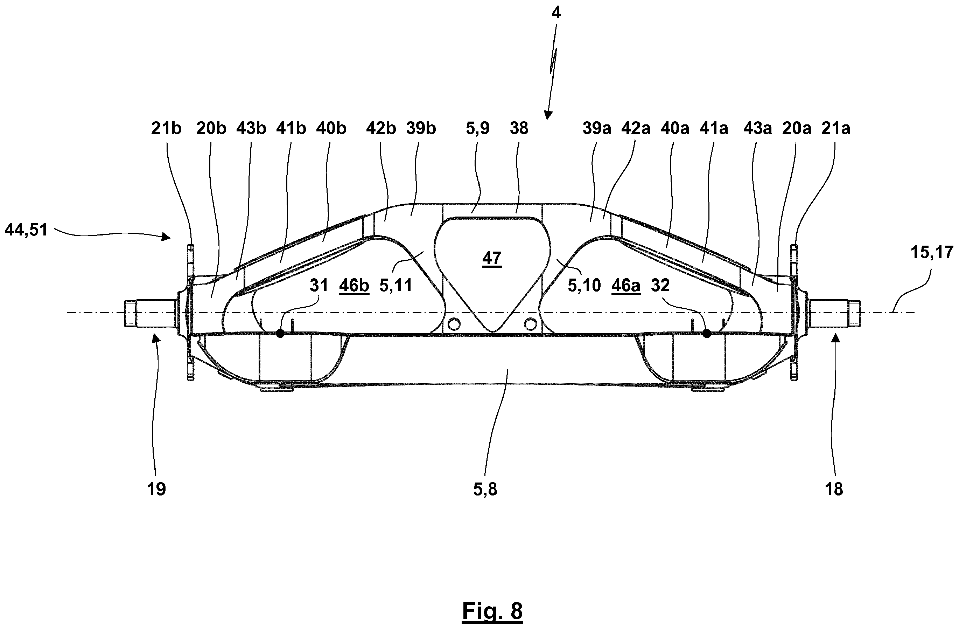

Das Teiltragwerk 44 erstreckt sich hierbei in einer vertikalen Ebene (vgl. Fig. 8). Das Teiltragwerk 44 ist gebildet mit der oberen Querstrebe 9, einem Teil des Verbindungsstücks 20, der unteren Querstrebe 8 und den beiden Diagonalstreben 10, 11, die ein flächiges "Fachwerk" aufspannen mit äußeren Zwischenräumen 46a, 46b, die durch das Verbindungsstück 20, einen Endbereich 40a, 40b, eine Diagonalstrebe 10, 11 und einen Teil der unteren Querstrebe 8 begrenzt sind, sowie einem mittigen Zwischenraum 47, der von den Diagonalstreben 10,11 und dem Mittelstück 38 der oberen Querstrebe 9 begrenzt ist. Im Bereich der Ringe 41 zur Ausbildung der Ausnehmungen 12,13 besitzt das Teiltragwerk 44 eine größere Erstreckung in eine Richtung quer zu der von dem Teiltragwerk 44 aufgespannten vertikalen Ebene. Das Teiltragwerk 44 bildet einen Achskörper 51.

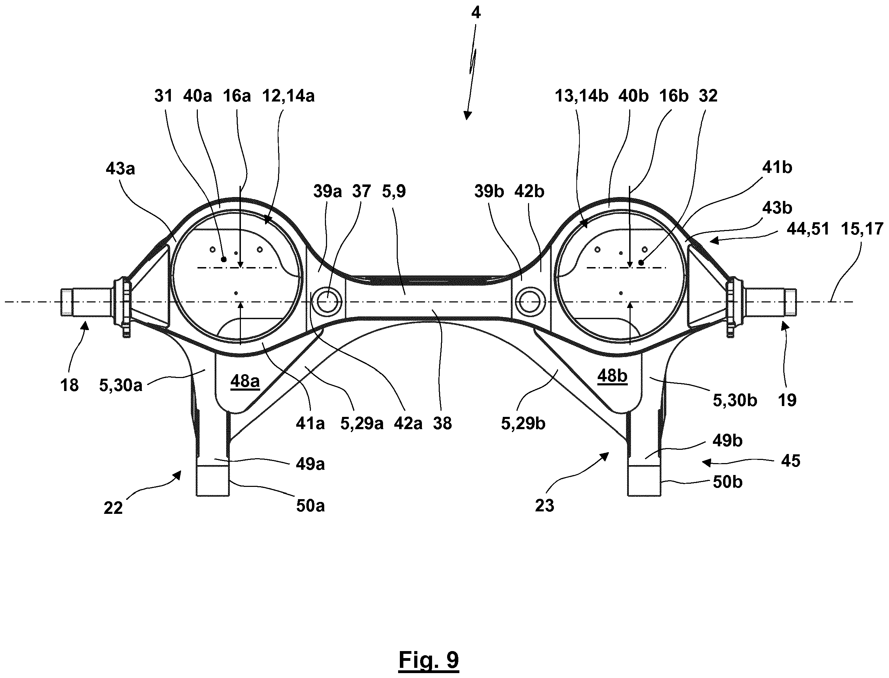

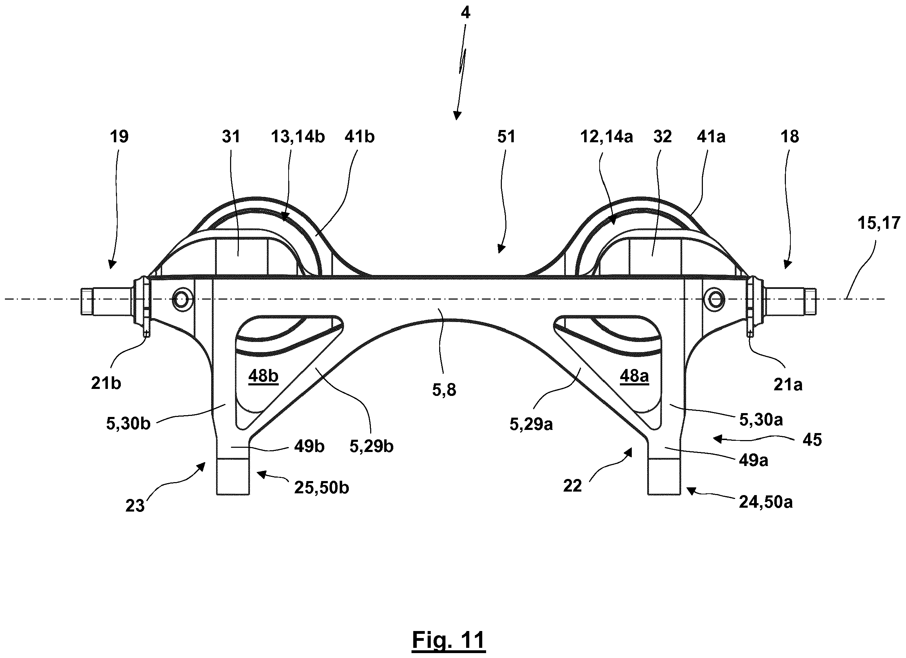

Das Teiltragwerk 45 erstreckt sich in einer horizontalen Ebene (vgl. Fig. 9, 11). Das Teiltragwerk 45 ist gebildet mit der unteren Querstrebe 8 und den beiden Streben 29, 30, die ebenfalls ein flächiges "Fachwerk" aufspannen mit Zwischenräumen 48a, 48b im Bereich der Längslenker 22,23, die begrenzt werden durch die Endbereich der unteren Querstrebe 8 und die zugeordneten Streben 29, 30.

Die beiden Teiltragwerke 44, 45 sind über die gemeinsame untere Querstrebe 8 zu dem Nutzfahrzeugfahrwerks-Tragwerk 4 miteinander verbunden. Es ergibt sich somit ein L-förmig abgewinkeltes Nutzfahrzeugfahrwerks-Tragwerk 4, bei dem der Vertikalschenkel des L mit dem Teiltragwerk 44 gebildet ist, während der Horizontalschenkel des L mit dem Teiltragwerk 45 gebildet ist.

Das Nutzfahrzeugfahrwerks-Tragwerk 4 ist vorzugsweise ganz oder teilweise aus einem Metall, insbesondere Stahl, hergestellt. Möglich ist, dass ein beliebiger Baustahl verwendet wird, wie beispielsweise Feinkornbaustahl der Bezeichnung S460 oder dergleichen. Möglich ist aber auch, dass das Nutzfahrzeugfahrwerks-Tragwerk 4 ganz oder teilweise auf einem beliebigen anderen Material hergestellt ist. So ist es möglich, dass das Nutzfahrzeugfahrwerks-Tragwerk 4 aus einem Verbundwerkstoff oder Faserverbundwerkstoff, beispielsweise ein Aluminium-Verbundwerkstoff, ein Graphit-Verbundwerkstoff oder Kohlefasern, welche in eine Matrix aus einem geeigneten Material (bspw. ein Kunststoff, insbesondere ein duromerer oder thermoplastischer Kunststoff) eingebettet sind, gefertigt ist. Hierbei können die Querschnitte der Streben 5 je nach eingesetztem Material und eingesetztem Fertigungsverfahren abweichend zu den dargestellten und beschriebenen Querschnitten ausgebildet sein, wobei dennoch vorzugsweise der hier beschriebene Grundaufbau des Nutzfahrzeugfahrwerks-Tragwerks 4 mit den Teiltragwerken 44, 45 und den einzelnen genannten Streben 5 zum Einsatz kommen kann. Die Achszapfen 18,19 sind vorzugsweise als Schmiedeteile ausgebildet.

Eine Verschwenkung der Längslenker 22, 23 erfolgt unter Beaufschlagung von Fahrwerksdämpfern 52a, 52b, die abseits der Drehgelenke 24, 25 einerseits an den Längslenkern 22, 23 und andererseits an den Konsolen 27, 28 angelenkt sind.

Möglich ist, dass die Drehachsen der Drehgelenke 24, 25 in Richtung der Längsachse des Nutzfahrzeugs
- einen Abstand im Bereich von 450 mm bis 650 mm von der Verbindungslinie 15 haben, während der Versatz 16 der zentralen Wirkachse der Fahrwerkfeder 6 von der Verbindungslinie 15 zwischen 70 und 90 mm beträgt, oder
- einen Abstand im Bereich von 500 mm bis 600 mm von der Verbindungslinie 15 haben, während der Versatz 16 der zentralen Wirkachse der Fahrwerkfeder 6 von der Verbindungslinie 15 zwischen 75 und 85 mm beträgt.

Möglich ist aber auch, dass der Versatz 16 ungefähr Null beträgt, womit die Komponente der Radlast, welche über die Drehgelenke 24, 25 übertragen wird, minimiert ist. Mit einer Vergrößerung des Versatzes 16 kann die Beaufschlagung der Fahrwerkfeder 6 reduziert werden, sodass bei vorgegebener maximaler Traglast der Fahrwerkfeder 6 über die Wahl des Versatzes 16 eine Beeinflussung der Beanspruchung der Fahrwerkfeder 6 erfolgen kann. Mit einer Vergrößerung des Versatzes 16 kann somit unter Umständen eine für geringere Traglasten ausgelegte Fahrwerkfeder 6 eingesetzt werden.

Vorzugsweise findet als Fahrwerkfeder 6 ein Luftfederbalg 7 Einsatz, welche einen Außendurchmesser von 360 mm hat. Somit verfügen die Ausnehmungen 12,13 über einen Mindestquerschnitt, welcher größer ist als eine Kreisfläche mit einem Durchmesser von 360 mm.

Die hier genannten Dimensionierungen, Werkstoffe und/oder die Gestaltung des Nutzfahrzeugfahrwerks-Tragwerks 4 können vorzugsweise eingesetzt werden für eine technische Achslast von mehr als 7 t, insbesondere mehr als 7,5 t oder sogar mehr als 8 t.

Das erfindungsgemäße Teilkonzept, in einem Nutzfahrzeugfahrwerks-Tragwerk 4 die obere Querstrebe 9 mit einer Ausnehmung 12,13 auszustatten, durch welche oberhalb einer unteren Querstrebe 8 ein zumindest nach oben geöffneter Raum ausgebildet ist, der zur Aufnahme der Fahrwerkfeder 6 geeignet ist, ist nicht gebunden an die hier dargestellte Ausgestaltung des Nutzfahrzeugfahrwerks. Um lediglich ein Beispiel zu nennen, ist nicht zwingend erforderlich, dass hier die Führung des Nutzfahrzeugfahrwerks-Tragwerks 4 ausschließlich über einen rechten sowie einen linken Längslenker 22, 23 erfolgt. Vielmehr kann auf beiden Fahrzeugseiten eine Führung des Fahrzeugrades über eine Parallelogramm-Führung mit einem oberen Längslenker sowie einem unteren Längslenker erfolgen und auch in diesem Fall ein nach oben offener Raum des Nutzfahrzeugfahrwerks-Tragwerks 4 für die Aufnahme der Fahrwerkfeder 6 genutzt werden. Alternativ oder zusätzlich möglich ist, dass in einem Nutzfahrzeugfahrwerks-Tragwerk 4 einer Fahrzeugseite nicht ausschließlich eine Fahrwerkfeder 6 zugeordnet ist, sondern der Fahrzeugseite mindestens zwei Fahrwerkfedern zugeordnet sind, die dann beispielsweise in Längsrichtung des Fahrzeugs hintereinander angeordnet sind. In diesem Fall können beide hintereinander angeordnete Fahrwerkfedern jeweils in einem nach oben geöffneten Raum in einer Ausnehmung einer oberen Querstrebe des Nutzfahrzeugfahrwerks-Tragwerks 4 angeordnet sein.

Das Nutzfahrzeugfahrwerks-Tragwerk 4 baut erheblich leichter und kostengünstiger als der Stand der Technik bei verbesserten Federungseigenschaften und eröffnet darüber hinaus Bauraum für den Einbau radnabennaher Elektromotoren. Diese Vorteile ergeben sich aus den folgenden Gründen:
Die Gewichtreduktion beruht im Wesentlichen darauf, dass erstens die Längslenker 22, 23 und zweitens der Achskörper 51 des Nutzfahrzeugfahrwerkes 1 leichter bauen als der Stand der Technik.

Die Gewichtsersparnis der Längslenker 22, 23 resultiert aus der direkteren Krafteinleitung der Radlast in die Fahrwerkfedern 6, da die Fahrwerkfedern 6 in der Seitenansicht in nahezu direkter vertikaler Linie über dem Radaufstandspunkt positioniert sind. Das verkürzt die Länge des vom Radaufstandspunkt zur Fahrwerkfeder 6 führenden Lastpfades. Die Längslenker 22, 23 übertragen kaum mehr vertikale Lasten, sind im vertikalen Lastfall frei von Biegemomenten und können daher verhältnismäßig dünnwandig und leicht dimensioniert werden. Um die bei Kurvenfahrt eingeleiteten Seitenkräfte besser übertragen zu können, sind die Längslenker 22, 23 dreieckförmig ausgeführt mit den inneren und äußeren Streben 29, 30, so dass diese hauptsächlich Zug- beziehungsweise Druckkräfte übertragen.

Die Gewichtsersparnis im mittleren Abschnitt des Nutzfahrzeugfahrwerkes, insbesondere des Achskörpers 51, wird dadurch erreicht, dass an Stelle des herkömmlichen Achskörpers 51 eine dünnwandige Tragwerkstruktur entsteht. Die vorgeschlagene Anordnung erlaubt es, die Wandstärke der Streben 5 auf 3mm zu reduzieren, da sie maßgeblich durch Zug- und Druckkräfte und nur in weitaus geringerem Umfang durch Biegemomente belastet werden. Dabei ist es so, dass bei vertikaler Lasteinleitung die obere Querstrebe 9 maßgeblich Druckkräfte und die untere Querstrebe 8 maßgeblich die Zugkräfte überträgt. Die Materialausnutzung der Zug- und Druckstreben ist wesentlich höher als bei herkömmlichen Achskörpern, weil sich Zug- und Druckspannungen homogener in den Querschnittsflächen verteilen. Demgegenüber werden herkömmliche Achskörper 51 maßgeblich durch Biegemomente belastet, wobei lediglich die Randfasern maximal belastet sind und das restliche Material unvollständig ausgelastet ist.

Insgesamt besteht der Gewichtsvorteil der Tragwerkstruktur darin, dass sie wesentlich mehr geometrische Gestaltungsmöglichkeiten als herkömmliche Konstruktionen bietet. Die Geometrie des Nutzfahrzeugfahrwerkes 1 vermag daher dem Kraftfluss zu folgen, so dass sich die Spannungen homogen in den Streben 5 verteilen. Auf diese Weise werden einerseits Kerbspannungsüberhöhungen und andererseits überschüssige Materialanhäufungen vermieden.

Im Gegensatz dazu bestehen herkömmliche Konstruktionen aus verhältnismäßig einfachen Halbzeug-Profilen wie Vierkant oder Rohr, die dem Konstrukteur weniger Gestaltungsmöglichkeiten bieten und deren Querschnitte und Wandstärken über die gesamte Länge konstant sind. Gebräuchlich sind beispielsweise Achsrohre der Abmessung 0127mm x 12mm. Kerbspannungsüberhöhungen im Bereich der Einspannungen der Längslenker sind bei herkömmlichen Konstruktionen zwangsläufig. Die Wandstärke des Achskörpers muss aber nach der höchsten Belastung im Bereich der Einspannung dimensioniert werden und abseits der Kerben sind die Bauteile vielfach überdimensioniert und schwerer als erforderlich.

Die Gewichtsreduktion gegenüber dem Stand der Technik beträgt 40 bis 70kg, je nachdem mit welcher Konstruktion verglichen wird. Bei den im Markt befindlichen Nutzfahrzeugfahrwerken wiegen Achskörper, Längslenker und Luftbalgträger zwischen 145kg und 175kg. Demgegenüber wiegt der vergleichbare Umfang der erfindungsgemäßen Konstruktion vorzugsweise weniger als 130 kg, insbesondere weniger als 125kg, 120kg, 115 kg, 110 kg, 105 kg oder sogar 100 kg. Die Gewichtsreduktion geht nicht zu Lasten der Lebensdauer, sondern wird allein durch den Leichtbauansatz der Tragwerkstruktur erreicht.

Im Hinblick auf die Verwendung als Nutzfahrzeugfahrwerk 1 für elektrisch angetriebene Achsen ergeben sich wesentliche Vorteile daraus, dass im Nutzfahrzeugfahrwerks-Tragwerk 4, insbesondere zwischen oberer und unterer Querstrebe 8, 9, freie Räume oder Zwischenräume 46, 47, 48 ausgebildet werden, in denen beispielsweise Elektronik oder radnabennahe Elektromotoren platziert werden können.

Der wirtschaftliche Nutzen der Erfindung ergibt sich aus dem verringerten Bauteilgewicht und hat im Wesentlichen drei Gründe: Erstens korreliert die Gewichtsreduktion mit den Herstellkosten, da weniger Fertigungsmaterial eingesetzt werden muss. Dies gilt unter der zutreffenden Annahme, dass unverändert marktüblicher Baustahl benutzt wird, wie beispielsweise Feinkornbaustahl der Bezeichnung S460 oder dergleichen. Zweitens ergibt sich ein wirtschaftlicher Vorteil daraus, dass sich die zulässige Fahrzeugnutzlast um den Betrag erhöht, um den das Leergewicht sinkt, da das maximale Fahrzeuggesamtgewicht vom Gesetzgeber begrenzt wird. Ein leichteres Nutzfahrzeug kann somit mehr Ladegut transportieren, wodurch die Transportkosten gesenkt werden. Drittens kommt dem Fahrzeugleergewicht bei der Vermarktung preisbildende Bedeutung zukommt, was zur Folge hat, dass leichtere Fahrzeuge besser verkauft werden können.

Ein weiterer Vorteil der erfindungsgemäßen Ausgestaltung sind die verbesserten Federungseigenschaften des vorgeschlagenen Nutzfahrzeugfahrwerkes 1, da die Achslast maßgeblich über die Fahrwerkfedern 6 ins Fahrzeugchassis 26 eingeleitet wird. Die Längslenker 22, 23 und deren Drehgelenke 24, 25 tragen kaum vertikale Lasten. Beim Fahren auf unebener Fahrbahn werden somit die auf das Fahrzeugchassis 26 und das Ladegut wirkenden Achslastamplituden verringert.

In der vorliegenden Beschreibung wird das Teiltragwerk 44 auch als "vertikales Teiltragwerk" bezeichnet, während das Teiltragwerk 45 auch als "horizontales Teiltragwerk" bezeichnet ist. Hiervon sind durchaus auch Ausführungsformen umfasst, bei welchen die Teiltragwerke 44, 45 in dem in das Nutzfahrzeug eingebauten Zustand nicht exakt horizontal oder vertikal ausgerichtet sind. So können die Teiltragwerke 44, 45 auch in einer Seitenansicht L-förmig angeordnet sein, wobei der Winkel der beiden Schenkel des L nicht exakt 90° ist, sondern auch zwischen 80° und 110° (vorzugsweise zwischen 85° und 95°) betragen kann. Auch wenn eine Abweichung von einem Winkel von 90° der beiden Schenkel des L vorliegt oder die Teiltragwerke 44, 45 nicht exakt horizontal oder exakt vertikal orientiert sind, ist das horizontale Teiltragwerk 45 so orientiert, dass dieses die Längslenker 22, 23 ausbilden kann, während das vertikale Teiltragwerk 44 so orientiert ist, dass dieses die Radlasten aufnehmen kann und eine hinreichende Steifigkeit um eine Biegeachse, die in Fahrzeuglängsrichtung orientiert ist, bereitstellen kann.

### BEZUGSZEICHENLISTE

- 1: Nutzfahrzeugfahrwerk
- 2: Radaufhängungspunkt
- 3: Radaufhängungspunkt
- 4: Nutzfahrzeugfahrwerks-Tragwerk
- 5: Strebe
- 6: Fahrwerkfeder
- 7: Luftfederbalg
- 8: untere Querstrebe
- 9: obere Querstrebe
- 10: Diagonalstrebe
- 11: Diagonalstrebe
- 12: Ausnehmung
- 13: Ausnehmung
- 14: Raum
- 15: Verbindungslinie
- 16: Versatz
- 17: Mittellinie
- 18: Achszapfen
- 19: Achszapfen
- 20: Verbindungsstück
- 21: Bremsflansch
- 22: Längslenker
- 23: Längslenker
- 24: Drehgelenk
- 25: Drehgelenk
- 26: Fahrzeugchassis
- 27: Konsole
- 28: Konsole
- 29: innere Strebe
- 30: äußere Strebe
- 31: Federkonsole
- 32: Federkonsole
- 33: Bremseinrichtung
- 34: Bremsscheibe
- 35: Radflansch
- 36: Bremsaktuator
- 37: Ausnehmung
- 38: Mittelstück
- 39: Abwinklung
- 40: Endbereich
- 41: Ring
- 42: Fortsatz
- 43: Fortsatz
- 44: Teiltragwerk
- 45: Teiltragwerk
- 46: Zwischenraum
- 47: Zwischenraum
- 48: Zwischenraum
- 49: Fortsatz
- 50: Lagerauge
- 51: Achskörper
- 52: Fahrwerksdämpfer

## Patentansprüche

1. Nutzfahrzeugfahrwerks-Tragwerk (4), welches einen Achskörper (51) und/oder Längslenker (22, 23) skelettartig mit mehreren eine Fläche oder einen Raum aufspannenden Streben (5) ausbildet,
a) wobei das Nutzfahrzeugfahrwerks-Tragwerk (4)
aa) eine untere Querstrebe (8) und
ab) eine obere Querstrebe (9), die
- oberhalb der unteren Querstrebe (8) angeordnet ist und
- mit der unteren Querstrebe (8) über mindestens eine Diagonalstrebe (10, 11) und/oder ein Verbindungsstück (20) verbunden ist,
aufweist,
b) die beiden Endbereiche (40) der oberen Querstrebe (9) nach unten in Richtung der unteren Querstrebe (8) abgewinkelt sind und
c) die obere Querstrebe (9) zwei Ausnehmungen (12, 13) aufweist, durch die oberhalb der unteren Querstrebe (10) ein zumindest nach oben geöffneter Raum (14) ausgebildet ist, der zur Aufnahme einer Fahrwerkfeder (6) geeignet ist.

2. Nutzfahrzeugfahrwerks-Tragwerk (4) nach Anspruch 1, **dadurch gekennzeichnet, dass** das Nutzfahrzeugfahrwerks-Tragwerk (4) in einer Seitenansicht L-förmig ausgebildet ist mit einem horizontalen, die Längslenker (22, 23) ausbildenden Teiltragwerk (45) und einem vertikalen, den Achskörper (51) ausbildenden Teiltragwerk (44).

3. Nutzfahrzeugfahrwerks-Tragwerk (4) nach Anspruch 1 oder 2, **dadurch gekennzeichnet, dass** die Streben (5) zumindest teilweise einen Doppel-T-Querschnitt aufweisen und aus Blechen geschweißt sind.

4. Nutzfahrzeugfahrwerks-Tragwerk (4) nach einem der Ansprüche 1 bis 3, **dadurch gekennzeichnet, dass** das Nutzfahrzeugfahrwerks-Tragwerk (4) zwei Längslenker (22, 23) aufweist, wobei die Längslenker (22, 23) jeweils
a) dreieckförmig ausgebildet sind und
b) über eine innere Strebe (29) und eine äußere Strebe (30) verfügen.

5. Nutzfahrzeugfahrwerks-Tragwerk (4) nach einem der vorhergehenden Ansprüche, **dadurch gekennzeichnet, dass** die obere Querstrebe (20) im Bereich der Ausnehmung (12, 13) zumindest teilweise einen Abstand von der unteren Querstrebe (10) besitzt, der kleiner ist als die Längserstreckung der Fahrwerkfeder (6).

6. Nutzfahrzeugfahrwerks-Tragwerk (4) nach einem der vorhergehenden Ansprüche, **dadurch gekennzeichnet, dass** das Nutzfahrzeugfahrwerks-Tragwerk (4) Radaufhängungspunkte (2, 3) aufweist, deren Verbindungslinie (15) den oberhalb der unteren Querstrebe (10) angeordneten, zumindest nach oben geöffneten Raum (14) durchkreuzt.

7. Nutzfahrzeugfahrwerks-Tragwerk (4) nach einem der vorhergehenden Ansprüche, **dadurch gekennzeichnet, dass** das Nutzfahrzeugfahrwerks-Tragwerk (4) mindestens zwei Diagonalstreben (10, 11) aufweist.

8. Nutzfahrzeugfahrwerks-Tragwerk (4) nach einem der vorhergehenden Ansprüche, **dadurch gekennzeichnet, dass** die obere Querstrebe (9) und die untere Querstrebe (8) an beiden Enden über ein Verbindungsstück (20) miteinander verbunden sind.

9. Nutzfahrzeugfahrwerks-Tragwerk (4) nach Anspruch 8, **dadurch gekennzeichnet, dass** das Verbindungsstück (20) einen Bremsflansch (21) und/oder einen Achszapfen (18, 19) integriert.

10. Nutzfahrzeugfahrwerks-Tragwerk (4) nach einem der vorhergehenden Ansprüche, **dadurch gekennzeichnet, dass** das Nutzfahrzeugfahrwerks-Tragwerk (4) mit einem Grundkörper gebildet ist, an welchem ein Bremsflansch (21) und/oder ein Achszapfen (18, 19) befestigt ist.

11. Nutzfahrzeugfahrwerks-Tragwerk (4) nach einem der vorhergehenden Ansprüche, **dadurch gekennzeichnet, dass** das Nutzfahrzeugfahrwerks-Tragwerk (4) für eine technische Achslast von zumindest 7000 kg bestimmt ist und eine Masse von weniger als 130 kg aufweist.

12. Nutzfahrzeugfahrwerk (1) mit einem Nutzfahrzeugfahrwerks-Tragwerk (4) nach einem der vorhergehenden Ansprüche, wobei
a) in den Ausnehmungen (12, 13) Fahrwerkfedern (6) platziert sind und/oder
b) in freien Flächen oder Zwischenräumen (46, 47, 48) des Nutzfahrzeugfahrwerks-Tragwerks (4)
ba) Elektronik,
bb) mindestens ein Elektromotor,
bc) eine Steuereinheit und/oder eine Ventileinrichtung zu Beeinflussung der pneumatischen Beaufschlagung einer als Luftfederbalg ausgebildeten Fahrwerkfeder, und/oder
bd) ein Bremsaktuator
angeordnet sind/ist.

## Claims

1. Commercial vehicle running gear structure (4) for a which comprises an axle body (51) and/or at least one longitudinal swinging arm (22, 23) in a skeletal design with a plurality of struts (5) defining a plane or a three-dimensional space,
a) the commercial vehicle running gear structure (4) comprising
aa) a lower transverse strut (8) and
ab) an upper transverse strut (9) which
- is arranged above the lower transverse strut (8) and
- is connected to the lower transverse strut (8) by at least one diagonal strut (10, 11) and/or a connecting piece (20),
b) the two end regions (40) of the upper transverse strut (9) being angled downwards towards the lower transverse strut (8) and
c) the upper transverse strut (9) comprising two recesses (12, 13) by which above the lower transverse strut (10) a space (14) is defined which is open at least in upper direction and which is suitable for accommodating a suspension spring (6).

2. Commercial vehicle running gear structure (4) of claim 1, **characterized in that** in a side view the commercial vehicle running gear structure (4) is L-shaped with a horizontal structure part (45) forming the longitudinal swinging arms (22, 23) and a vertical structure part (44) forming the axle body (51).

3. Commercial vehicle running gear structure (4) of claim 1 or 2, **characterized in that** the struts (5) at least partially comprise a double-T cross section and the struts are made of welded metal sheets.

4. Commercial vehicle running gear structure (4) of one of claims 1 to 3, **characterized in that** the commercial vehicle running gear structure (4) comprises two longitudinal swinging arms (22, 23), the longitudinal swinging arms (22, 23) each
a) have a triangular shape and
b) comprise an inner strut (29) and an outer strut (30).

5. Commercial vehicle running gear structure (4) of one of the preceding claims, **characterized in that** in the region of the recess (12, 13) the upper transverse strut (20) has at least partially a distance from the lower transverse strut (10) which is smaller than the longitudinal extension of the suspension spring (6).

6. Commercial vehicle running gear structure (4) of one of the preceding claims, **characterized in that** the commercial vehicle running gear structure (4) comprises wheel suspension locations (2, 3) and the connecting line (15) of the wheel suspension locations (2, 3) crosses the space (14) which is arranged above the lower transverse strut (10) and which is open at least in upper direction.

7. Commercial vehicle running gear structure (4) of one of the preceding claims, **characterized in that** the commercial vehicle running gear structure (4) comprises at least two diagonal struts (10, 11).

8. Commercial vehicle running gear structure (4) of one of the preceding claims, **characterized in that** the upper transverse strut (9) and the lower transverse strut (8) are linked to each other at both ends by a connecting piece (20).

9. Commercial vehicle running gear structure (4) of claim 8, **characterized in that** a brake flange (21) and/or an axle trunnion (18, 19) are/is integrated into the connecting piece (20).

10. Commercial vehicle running gear structure (4) of one of the preceding claims, **characterized in that** the commercial vehicle running gear structure (4) comprises a base body, a brake flange (21) and/or an axle trunnion (18, 19) being mounted or fixed to the base body.

11. Commercial vehicle running gear structure (4) of one of the preceding claims, **characterized in that** the commercial vehicle running gear structure (4) is designated for a technical axle load of at least 7000 kg and comprises a mass of less than 130 kg.

12. Commercial vehicle running gear (1) comprising a commercial vehicle running gear structure (4) of one of the preceding claims, wherein
a) suspension springs (6) are arranged in the recesses (12, 13) and/or
b) in the free areas or interspaces (46, 47, 48) of the commercial vehicle running gear structure (4)
ba) electronics,
bb) at least one electric motor,
bc) a control unit and/or a valve device for changing the pneumatical bias of a suspension spring embodied as an air suspension bellow and/or
bd) a brake actuator
is/are arranged.

## Revendications

1. Structure porteuse de châssis de véhicule utilitaire (4), qui forme un corps axial (51) et/ou un bras oscillant longitudinal (22, 23) de manière squelettique avec plusieurs entretoises (5) définissant une surface ou un espace,
a) la structure porteuse de châssis de véhicule utilitaire (4) comprenant
aa) une entretoise transversale inférieure (8) et
ab) une entretoise transversale supérieure (9), qui
- est disposée au-dessus de l'entretoise transversale inférieure (8) et
- qui est reliée avec l'entretoise transversale inférieure (8) par l'intermédiaire d'au moins une entretoise diagonale (10, 11) et/ou une pièce de liaison (20),
b) les deux parties d'extrémité (40) de l'entretoise transversale supérieure (9) étant pliées vers le bas en direction de l'entretoise transversale inférieure (8) et
c) l'entretoise transversale supérieure (9) comprenant deux évidements (12, 13) grâce auxquels, au-dessus de l'entretoise transversale inférieure (10), est formé un espace (14) ouvert au moins vers le haut, qui est conçu pour le logement d'un ressort de châssis (6).

2. Structure porteuse de châssis de véhicule utilitaire (4) selon la revendication 1, **caractérisée en ce que** la structure porteuse de châssis de véhicule utilitaire (4) présente, en vue latérale, une forme de L, avec une structure porteuse partielle (45) horizontale constituant les bras oscillants longitudinaux (22, 23) et une structure porteuse partielle (44) verticale constituant le corps axial (51).

3. Structure porteuse de châssis de véhicule utilitaire (4) selon la revendication 1 ou 2, **caractérisée en ce que** les entretoises (5) présentent au moins partiellement une section transversale en forme de double t et sont soudées à partir de tôles.

4. Structure porteuse de châssis de véhicule utilitaire (4) selon l'une des revendications 1 à 3, **caractérisée en ce que** la structure porteuse de châssis de véhicule utilitaire (4) comprend deux bras oscillants longitudinaux (22, 23), les bras oscillants longitudinaux (22, 23)
a) présentant respectivement une forme triangulaire et
b) disposant chacun d'une entretoise interne (29) et d'une entretoise externe (30).

5. Structure porteuse de châssis de véhicule utilitaire (4) selon l'une des revendications précédentes, **caractérisée en ce que** l'entretoise transversale supérieure (20) présente, au niveau de l'évidement (12, 13), au moins partiellement une distance par rapport à l'entretoise transversale inférieure (10) qui est inférieure à l'extension longitudinale du ressort du châssis (6).

6. Structure porteuse de châssis de véhicule utilitaire (4) selon l'une des revendications précédentes, **caractérisée en ce que** la structure porteuse de châssis de véhicule utilitaire (4) comprend des points de suspension de roues (2, 3) dont la ligne de liaison (15) croise l'espace (14), ouvert au moins vers le haut, disposé au-dessus de l'entretoise transversale inférieure (10).

7. Structure porteuse de châssis de véhicule utilitaire (4) selon l'une des revendications précédentes, **caractérisée en ce que** la structure porteuse de châssis de véhicule utilitaire (4) comprend au moins deux entretoises diagonales (10, 11).

8. Structure porteuse de châssis de véhicule utilitaire (4) selon l'une des revendications précédentes, **caractérisée en ce que** l'entretoise transversale supérieure (9) et l'entretoise transversale inférieure (8) sont reliées entre elles au niveau des deux extrémités par l'intermédiaire d'une pièce de liaison (20).

9. Structure porteuse de châssis de véhicule utilitaire (4) selon la revendication 8, **caractérisée en ce que** la pièce de liaison (20) comprend une bride de freinage (21) et/ou un tourillon d'axe (18, 19).

10. Structure porteuse de châssis de véhicule utilitaire (4) selon l'une des revendications précédentes, **caractérisée en ce que** la structure porteuse de châssis de véhicule utilitaire (4) est constituée d'un corps de base auquel est fixée une bride de freinage (21) et/ou un tourillon d'axe (18, 19).

11. Structure porteuse de châssis de véhicule utilitaire (4) selon l'une des revendications précédentes, **caractérisée en ce que** la structure porteuse de châssis de véhicule utilitaire (4) est conçue pour une charge axiale technique d'au moins 7000 kg et présente une masse inférieure à 130 kg.

12. Châssis de véhicule utilitaire (1) avec une structure porteuse de châssis de véhicule utilitaire (4) selon l'une des revendications précédentes, moyennant quoi
a) dans les évidements (12, 13), sont disposés des ressorts de châssis (6) et/ou
b) dans les surfaces libres ou les espaces intermédiaires (46, 47, 48), de la structure porteuse de châssis de véhicule utilitaire (4), est/sont disposés
ba) une électronique,
bb) au moins un moteur électrique
bc) une unité de commande et/ou un dispositif à soupapes pour le contrôle de l'alimentation pneumatique d'un ressort de châssis conçu comme un ressort pneumatique et/ou
bd) un actionneur de freinage.
